# EUROPEAN PATENT APPLICATION

(11) **EP 4 576 845 A1**
(43) Date of publication of application: **25.06.2025**
(21) Application number: 23219775.6
(22) Date of filing: 22.12.2023
(51) Int. Cl.: H04W 4/80, H04W 72/0453, H04W 72/044, H04W 84/18, H04W 64/00

(54) **METHODS AND DEVICES TO INCREASE CONNECTIVITY AND QUALITY OF EXPERIENCE**

(71) Applicant: INTEL Corporation, Santa Clara, CA 95054 (US)
(72) Inventor: KAPILA, Smit, 560102 Bangalore (IN); R, Aneesh, 560035 Bangalore (IN); BANAVARA, Prasanna Ramarao, 560078 Bangalore (IN); CHOUDHURY, Deepika, Bengaluru (IN); DAS, Sajal Kumar, 560115 Bangalore (IN); HIREGOUDAR, Vijayakumar, 560100 Bangalore (IN); JAGADISH, Arun, 560052 Bangalore (IN); KAMADOLLI, Karunakar, Bangalore (IN); KAR, Purbasha, 560066 Bangalore (IN); KUMAR, Brijesh, 282007 Agra (IN); KUMARAPPAN, Jayakumar, 560068 Bangalore (IN); MASTI, Sandeep, 560103 Bengaluru (IN); MITTY, Harish, 560097 Bangalore (IN); PAMMI, Lakshmiravikanth, 534112 Dubacherla (IN); PEDDIREDDY, Prathibha, 560087 Bangalore (IN); R, Rahul, 683102 Aluva (IN); SANGLE, Parshuram, Bengaluru (IN); SINGH, Balvinder Pal, 490020 Bhilai (IN); THAKUR, Jayprakash, 560035 Bangalore (IN)
(74) Representative: Viering, Jentschura & Partner mbB Patent- und Rechtsanwälte

(57) **Abstract**

An apparatus of a radio communication device, the apparatus may include a processor configured to: determine a radiation pattern for a plurality of channels of a short-range wireless communication network, wherein the radiation pattern is representative of quality metrics for the plurality of channels at a plurality of directions relative to the radio communication device; determine a location of a further radio communication device; configure a parameter of a connection with the further radio communication device based on the radiation pattern and the location of the further radio communication device.

## Description

### Technical Field

This disclosure generally relates to methods and apparatus to perform short-range wireless communication.

### Background

Many wireless communication technologies, in particular, short-range wireless communication technologies (e.g. Bluetooth, Wi-Fi Direct) may allow communication between primary devices and secondary devices using established short-range wireless communication links. In consideration of various use cases for a device that is capable communication via short-range wireless communication technologies, it may be desirable to adaptively determining radiation patterns and/or channel assessments to increase connectivity and quality of experience (QoE) of short-range wireless communication devices.

Furthermore, in many wireless communication technologies, it may further be desirable to predict network usage pattern of radio communication devices and control network traffic based on predicted network usage patterns to ensure that QoE is maintained in accordance with application requirements. Moreover, through monitoring of operational resources of devices within an environment, it may also be desirable to recommend other available devices within the environment to a user in case of a resource becoming sparse at a device having an established connection to perform certain tasks. Additionally, it may also be desirable to configure communication resources automatically in case of an emergency situation.

### Brief Description of the Drawings

In the drawings, like reference characters generally refer to the same parts throughout the different views. The drawings are not necessarily to scale, emphasis instead generally being placed upon illustrating the principles of the disclosure. In the following description, various aspects of the disclosure are described with reference to the following drawings, in which:
FIG. 1 shows an exemplary radio communication network;
FIG. 2 shows an exemplary internal configuration of a communication device;
FIG. 3 shows an exemplary illustration of a network topology that communication devices may use;
FIG. 4 shows an exemplary illustration of RF channels used by three established links based on a channel hopping mechanism;
FIG. 5 shows an exemplary apparatus for a communication device;
FIG. 6A shows an example of an illustration of two radiation patterns;
FIG. 6B shows another example of an illustration of a radiation pattern combined for two channels;
FIG. 7 shows an exemplary illustration of a short-range wireless network environment;
FIG. 8 shows an exemplary illustration of a channel assessment table. As illustrated herein;
FIG. 9 shows an exemplary illustration of a short-range wireless network for a multi-device ecosystem;
FIG. 10 exemplarily illustrates schematically a multi-device ecosystem including communication devices;
FIG. 11 shows an exemplary schematic illustration of a communication device;
FIG. 12 shows an exemplary illustration of a flow diagram in case of a received emergency alert;
FIG. 13 illustrates schematically an example of a network environment including multiple communication devices sharing the same radio communication resources;
FIG. 14 shows schematically an exemplary illustration of a deployment of monitoring functions of a communication device;
FIG. 15 shows schematically an example of a processor and a memory to implement an AI/ML;
FIG. 16 shows an exemplary illustration of a communication with respect to a predicted network usage pattern;
FIG. 17 shows an example of a method;
FIG. 18 shows an example of a method;
FIG. 19 shows an example of a method;
FIG. 20 shows an example of a method.

### Description

The following detailed description refers to the accompanying drawings that show, by way of illustration, exemplary details and aspects in which aspects of the present disclosure may be practiced.

Short-range wireless communication networks like Bluetooth, WLAN, etc. may often face connection problems, causing disruptions in calls when users move around indoors. These interruptions may happen because of signal interference from other devices, physical barriers like walls, or electromagnetic interference from nearby electronics. The signal strength also may also vary as users move, leading to unstable connections that affect the user experience negatively.

Solving these issues traditionally involves using better technology to handle signal problems, improving antenna designs for wider coverage, and managing how frequencies are used, and the like. It may also be considered important to explore ways to adjust how devices send signals to keep connections stable, especially when users are moving around a lot. Collaboration between device makers, network experts, and standard-setting groups is key to creating stronger solutions for these common connection problems in short-range wireless networks.

Furthermore, obtaining detailed channel assessment data may have become increasingly critical, encompassing insights into channel conditions across various networks and radio zones within an environment. This data may be considered as vital as it may provide a comprehensive understanding of how different networks, such as Bluetooth (BT) and Wireless Local Area Networks (WLAN), operate within a shared space. By capturing information on channel conditions which may include signal strengths, interference levels, and bandwidth availability, it may become feasible to assess the dynamic nature of these wireless networks. This detailed data can reveal coexistence challenges between multiple radio access technologies, enabling more efficient spectrum allocation and management.

The necessity for such detailed channel assessment data may arise from the growing complexity of wireless environments. With diverse networks coexisting in the same space, the potential for interference and congestion may increase. Understanding the specific conditions within these radio zones may be helpful in optimizing network performance, minimizing disruptions, and enhancing overall reliability for users accessing different wireless services simultaneously. Additionally, this data may serve as a foundational element in developing sophisticated algorithms and protocols that may facilitate seamless coexistence and efficient utilization of the available spectrum among various wireless technologies.

As used herein, "communication device" (e.g. a radio communication device) may refer to any type of electronic devices that are able to exchange information with at least another device, for example according to various types of radio communication technologies and using various types of communication protocols as exemplarily provided herein. Exemplarily, a communication device may be, or may include, an access point, a station, any types of user devices which may include a suitable device including a processor, that may include, a mobile device or a non-mobile device, a user equipment (UE), a computing device, such as a personal computer (PC), a desktop computer, a mobile computer, a laptop computer, a notebook computer, a tablet computer, a server, a handheld computing device, a wearable device, such as a smart bracelet, a smart watch, smart glasses, a smart ring, etc., an internet of things (IoT) device, a sensor, a mobile phone, a cellular telephone, any types of wireless accessories, such as a headphone, a headset, a microphone, a speaker, a domotics (smart home) device, a docking station, a medical device, an endoscope, a surgical robot, a hearing aid, a cochlear implant device or a system, a Bluetooth medical device, an audio communication device, a headset, a headphone, an earphone, an earbud, a true wireless earphone, a wireless speaker, an in-vehicle device, or a device for vehicles, etc.

The apparatuses and methods of this disclosure may utilize or be related to radio communication technologies. While some examples may refer to specific radio communication technologies, the examples provided herein may be similarly applied to various other radio communication technologies, both existing and not yet formulated, particularly in cases where such radio communication technologies share similar features as disclosed regarding the following examples. Various exemplary radio communication technologies that the apparatuses and methods described herein may utilize include, but are not limited to: a Global System for Mobile Communications ("GSM") radio communication technology, a General Packet Radio Service ("GPRS") radio communication technology, an Enhanced Data Rates for GSM Evolution ("EDGE") radio communication technology, and/or a Third Generation Partnership Project ("3GPP") radio communication technology, for example Universal Mobile Telecommunications System ("UMTS"), Freedom of Multimedia Access ("FOMA"), 3GPP Long Term Evolution ("LTE"), 3GPP Long Term Evolution Advanced ("LTE Advanced"), Code division multiple access 2000 ("CDMA2000"), Cellular Digital Packet Data ("CDPD"), Mobitex, Third Generation (3G), Circuit Switched Data ("CSD"), High-Speed Circuit-Switched Data ("HSCSD"), Universal Mobile Telecommunications System ("Third Generation") ("UMTS (3G)"), Wideband Code Division Multiple Access (Universal Mobile Telecommunications System) ("W-CDMA (UMTS)"), High Speed Packet Access ("HSPA"), High-Speed Downlink Packet Access ("HSDPA"), High-Speed Uplink Packet Access ("HSUPA"), High Speed Packet Access Plus ("HSPA+"), Universal Mobile Telecommunications System-Time-Division Duplex ("UMTS-TDD"), Time Division-Code Division Multiple Access ("TD-CDMA"), Time Division-Synchronous Code Division Multiple Access ("TD-CDMA"), 3rd Generation Partnership Project Release 8 (Pre-4th Generation) ("3GPP Rel. 8 (Pre-4G)"), 3GPP Rel. 9 (3rd Generation Partnership Project Release 9), 3GPP Rel. 10 (3rd Generation Partnership Project Release 10) , 3GPP Rel. 11 (3rd Generation Partnership Project Release 11), 3GPP Rel. 12 (3rd Generation Partnership Project Release 12), 3GPP Rel. 13 (3rd Generation Partnership Project Release 13), 3GPP Rel. 14 (3rd Generation Partnership Project Release 14), 3GPP Rel. 15 (3rd Generation Partnership Project Release 15), 3GPP Rel. 16 (3rd Generation Partnership Project Release 16), 3GPP Rel. 17 (3rd Generation Partnership Project Release 17), 3GPP Rel. 18 (3rd Generation Partnership Project Release 18), 3GPP 5G, 3GPP LTE Extra, LTE-Advanced Pro, LTE Licensed-Assisted Access ("LAA"), MuLTEfire, UMTS Terrestrial Radio Access ("UTRA"), Evolved UMTS Terrestrial Radio Access ("E-UTRA"), Long Term Evolution Advanced (4th Generation) ("LTE Advanced (4G)"), cdmaOne ("2G"), Code division multiple access 2000 (Third generation) ("CDMA2000 (3G)"), Evolution-Data Optimized or Evolution-Data Only ("EV-DO"), Advanced Mobile Phone System (1st Generation) ("AMPS (1G)"), Total Access Communication arrangement/Extended Total Access Communication arrangement ("TACS/ETACS"), Digital AMPS (2nd Generation) ("D-AMPS (2G)"), Push-to-talk ("PTT"), Mobile Telephone System ("MTS"), Improved Mobile Telephone System ("IMTS"), Advanced Mobile Telephone System ("AMTS"), OLT (Norwegian for Offentlig Landmobil Telefoni, Public Land Mobile Telephony), MTD (Swedish abbreviation for Mobiltelefonisystem D, or Mobile telephony system D), Public Automated Land Mobile ("Autotel/PALM"), ARP (Finnish for Autoradiopuhelin, "car radio phone"), NMT (Nordic Mobile Telephony), High capacity version of NTT (Nippon Telegraph and Telephone) ("Hicap"), Cellular Digital Packet Data ("CDPD"), Mobitex, DataTAC, Integrated Digital Enhanced Network ("iDEN"), Personal Digital Cellular ("PDC"), Circuit Switched Data ("CSD"), Personal Handy-phone System ("PHS"), Wideband Integrated Digital Enhanced Network ("WiDEN"), iBurst, Unlicensed Mobile Access ("UMA"), also referred to as also referred to as 3GPP Generic Access Network, or GAN standard), Zigbee, Bluetooth^{®}, Wireless Gigabit Alliance ("WiGig") standard, mmWave standards in general (wireless systems operating at 10-300 GHz and above such as WiGig, IEEE 802.1 1ad, IEEE 802.11ay, etc.), technologies operating above 300 GHz and THz bands, (3GPP/LTE based or IEEE 802.11p and other) Vehicle-to-Vehicle ("V2V") and Vehicle-to-X ("V2X") and Vehicle-to-Infrastructure ("V2I") and Infrastructure-to-Vehicle ("12V") communication technologies, 3GPP cellular V2X, DSRC (Dedicated Short Range Communications) communication arrangements such as Intelligent-Transport-Systems, and other existing, developing, or future radio communication technologies.

The apparatuses and methods described herein may use such radio communication technologies according to various spectrum management schemes, including, but not limited to, dedicated licensed spectrum, unlicensed spectrum, (licensed) shared spectrum (such as LSA = Licensed Shared Access in 2.3-2.4 GHz, 3.4-3.6 GHz, 3.6-3.8 GHz and further frequencies and SAS = Spectrum Access System in 3.55-3.7 GHz and further frequencies), and may use various spectrum bands including, but not limited to, IMT (International Mobile Telecommunications) spectrum (including 450-470 MHz, 790-960 MHz, 1710-2025 MHz, 2110-2200 MHz, 2300-2400 MHz, 2500-2690 MHz, 698-790 MHz, 610-790 MHz, 3400-3600 MHz, etc., where some bands may be limited to specific region(s) and/or countries), IMT-advanced spectrum, IMT-2020 spectrum (expected to include 3600-3800 MHz, 3.5 GHz bands, 700 MHz bands, bands within the 24.25-86 GHz range, etc.), spectrum made available under FCC's "Spectrum Frontier" 5G initiative (including 27.5-28.35 GHz, 29.1-29.25 GHz, 31-31.3 GHz, 37-38.6 GHz, 38.6-40 GHz, 42-42.5 GHz, 57-64 GHz, 64-71 GHz, 71-76 GHz, 81-86 GHz and 92-94 GHz, etc.), the ITS (Intelligent Transport Systems) band of 5.9 GHz (typically 5.85-5.925 GHz) and 63-64 GHz, bands currently allocated to WiGig such as WiGig Band 1 (57.24-59.40 GHz), WiGig Band 2 (59.40-61.56 GHz) and WiGig Band 3 (61.56-63.72 GHz) and WiGig Band 4 (63.72-65.88 GHz), the 70.2 GHz-71 GHz band, any band between 65.88 GHz and 71 GHz, bands currently allocated to automotive radar applications such as 76-81 GHz, and future bands including 94-300 GHz and above. Furthermore, the apparatuses and methods described herein can also employ radio communication technologies on a secondary basis on bands such as the TV White Space bands (typically below 790 MHz) where e.g. the 400 MHz and 700 MHz bands are prospective candidates. Furthermore, the apparatuses and methods described herein may also use radio communication technologies with a hierarchical application, such as by introducing a hierarchical prioritization of usage for different types of users (e.g., low/medium/high priority, etc.), based on a prioritized access to the spectrum e.g., with highest priority to tier-1 users, followed by tier-2, then tier-3, etc. users, etc. The apparatuses and methods described herein can also use radio communication technologies with different Single Carrier or OFDM flavors (CP-OFDM, SC-FDMA, SC-OFDM, filter bank-based multicarrier (FBMC), OFDMA, etc.) and e.g. 3GPP NR (New Radio), which can include allocating the OFDM carrier data bit vectors to the corresponding symbol resources.

For purposes of this disclosure, radio communication technologies may be classified as one of a Short Range radio communication technology or Cellular Wide Area radio communication technology. Short Range radio communication technologies may include Bluetooth, WLAN (e.g., according to any IEEE 802.11 standard), and other similar radio communication technologies including Wireless Personal Area Network (WPAN) standards (e.g., according to any IEEE 802.15 standard), Wi-Fi Direct, Cellular Wide Area radio communication technologies may include Global System for Mobile Communications ("GSM"), Code Division Multiple Access 2000 ("CDMA2000"), Universal Mobile Telecommunications System ("UMTS"), Long Term Evolution ("LTE"), General Packet Radio Service ("GPRS"), Evolution-Data Optimized ("EV-DO"), Enhanced Data Rates for GSM Evolution ("EDGE"), High Speed Packet Access (HSPA; including High Speed Downlink Packet Access ("HSDPA"), High Speed Uplink Packet Access ("HSUPA"), HSDPA Plus ("HSDPA+"), and HSUPA Plus ("HSUPA+")), Worldwide Interoperability for Microwave Access ("WiMax") (e.g., according to an IEEE 802.16 radio communication standard, e.g., WiMax fixed or WiMax mobile), etc., and other similar radio communication technologies. Cellular Wide Area radio communication technologies also include "small cells" of such technologies, such as microcells, femtocells, and picocells. Cellular Wide Area radio communication technologies may be generally referred to herein as "cellular" communication technologies.

Bluetooth (BT) technology may use frequencies between 2.402 and 2.480 GHz, or 2.400 and 2.4835 GHz including guard bands 2 MHz wide at the bottom end and 3.5 MHz wide at the top, according to frequency-hopping spread spectrum. A communication device operating according to a Bluetooth protocol may divide data to be transmitted into packets, and transmit each packet into a channel designated for the use (e.g. of bandwidth of 1 MHz for classic Bluetooth and 2 MHz for Bluetooth Low Energy (BLE)). A communication device configured to operate according to a Bluetooth protocol may operate in a basic rate (BR) mode using a Gaussian frequency-shift keying (GFSK) modulation, and/or operate in an enhanced data rate (EDR) mode, that is considered to provide a faster data rate and lower power consumption, using a differential phase-shift keying (DPSK) (e.g. 8-DPSK) and/or differential quadrature phase-shift keying (DQPSK) (e.g. π/4-DQPSK) based on the quality of the communication channel. A communication device configured to operate according to a Bluetooth protocol may operate according to the Bluetooth Low Energy (BLE) technology that is integrated within the Bluetooth standard starting from v4.0, which operates within the same frequency spectrum, using GFSK modulation.

Wi-Fi Direct technology, which may also be referred to as Wi-Fi P2P, may be one of the exemplary technologies used with respect to peer-to-peer connections provided in this disclosure. Peer-to-peer connections may refer to point-to-point connections between two communication devices according to a peer-to-peer communication protocol. Within a peer-to-peer network, communication devices (two or more) may communicate with each other over the P2P connections established between them. A Wi-Fi Direct connection may allow communication devices to communicate over an established Wi-Fi Direct connection without an intermediary entity such as an access point or a router. Wi-Fi Direct technology allows for forming a P2P network by forming a P2P group in which a communication device may take the role of a Group Owner (GO) or a Group Client (GC).

In accordance with various aspects of this disclosure, a communication device may communicate with at least one further communication device. In some aspects, a short-range wireless communication device may communicate with at least one further short-range wireless communication device over an established short-range wireless communication link. The short-range wireless communication device may have connections that are established with multiple short-range wireless communication devices simultaneously. Various aspects provided herein may include examples in which short-range wireless communication is Bluetooth (BT) communication and accordingly in respective aspects, a short-range wireless connection may include BT connections. Operations may include BT communication in a BR/EDR mode or in a BLE mode.

In some aspects, methods and apparatus may employ channel hopping mechanisms with an intention to reduce interference and fading by using a number of frequency hopping spread spectrum carriers. In those aspects, connected communication devices may communicate with each other according to a determined channel hopping pattern. In existing channel hopping mechanisms, one of the communication devices may determine the channel hopping patterns randomly (e.g. frequency hopping in BT), or pseudo-randomly based on certain considerations (e.g. adaptive frequency hopping in BT). It may be desirable for the respective communication device to determine a channel hopping pattern to be used with another communication device according to a designated scheduling mechanism by scheduling channels having better quality more frequently.

In some aspects, methods and apparatus may employ various configuration mechanisms associated with established synchronous links in BT, particularly for audio connections in some examples, with an intention to reduce power consumption and use of the allocated spectrum efficiently, which may further reduce interference for other BT devices within the same environment.

In some aspects, methods and apparatus may employ various accessibility mechanisms with an intention to improve accessibility of a computing device for visually impaired users. It may be desirable for a computing device to operate in a designated mode with an improved accessibility over an established interface between a designated input device and applications, and in some aspects in designated low power operation modes with an intention to conserve power.

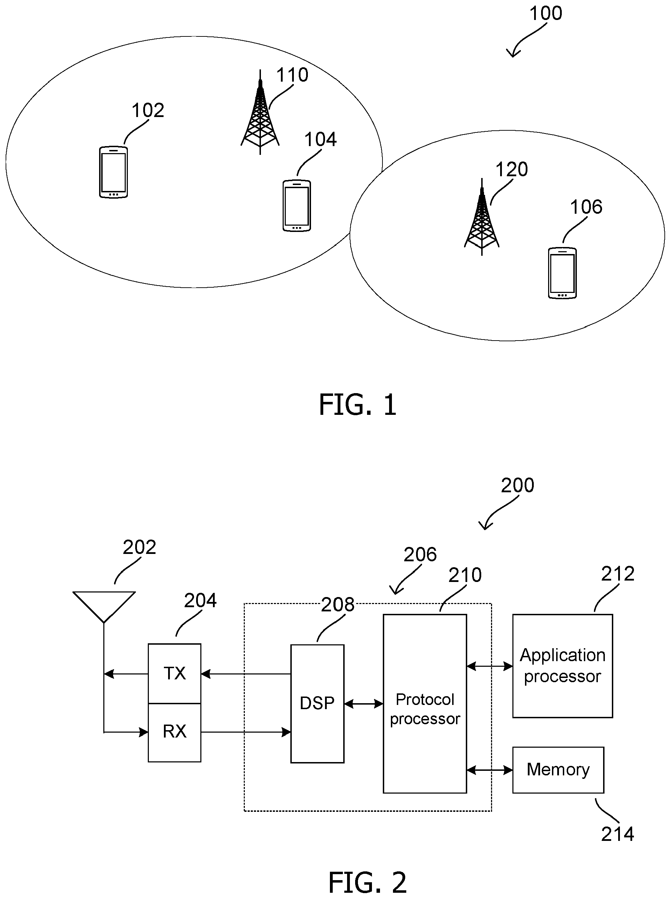

FIGs. 1 and 2 depict a general network and device architecture for wireless communications. In particular, FIG. 1 shows exemplary radio communication network 100 according to some aspects, which may include communication devices depicted as terminal devices 102, 104, and 106 and communication devices depicted as network access node 110. Radio communication network 100 may communicate with terminal devices 102 and 104 via network access node 110 over a radio access network. Although certain examples described herein may refer to a particular radio access network context (e.g., LTE, UMTS, GSM, other 3rd Generation Partnership Project (3GPP) networks, WLAN/WiFi, Bluetooth, 5GNR, mmWave, etc.), these examples are demonstrative and may therefore be readily applied to any other type or configuration of radio access network. In various examples, terminal devices 102 and 104 may communicate with each other without involvement of the radio access network, such as over a peer-to-peer network.

In an exemplary cellular context, network access node 110 may be base stations (e.g., eNodeBs, NodeBs, Base Transceiver Stations (BTSs), gNodeBs, or any other type of base station), while terminal devices 102, 104 and 106 may be cellular terminal devices (e.g., Mobile Stations (MSs), User Equipments (UEs), or any type of cellular terminal device). Network access node 110 may therefore interface (e.g., via backhaul interfaces) with a cellular core network such as an Evolved Packet Core (EPC, for LTE), Core Network (CN, for UMTS), or other cellular core networks, which may also be considered part of radio communication network 100. Terminal devices 102 and 104 may exemplarily be terminal devices within the same vicinity (in proximity). The cellular core network may interface with one or more external data networks. In an exemplary short-range wireless context other than BT, network access node 110 and 120 may be access points (APs, e.g., WLAN or WiFi APs), while terminal device 102 and 104 may be short range terminal devices (e.g., stations (STAs)). Network access node 110 may interface (e.g., via an internal or external router) with one or more external data networks. Network access node 110 and terminal devices 102 and 104 may include one or multiple transmission/reception points (TRPs). In an exemplarily BT network, network access node 110 and 120 may be a primary device of the BT network (e.g. piconet) and terminal devices 102 and 104 may be a secondary device of the BT network.

Network access node 110 (and, optionally, other network access nodes of radio communication network 100 not explicitly shown in FIG. 1) may accordingly provide a radio access network to terminal devices 102, 104, and 106 (and, optionally, other terminal devices of radio communication network 100 not explicitly shown in FIG. 1). In an exemplary cellular context, the radio access network provided by network access node 110 may enable terminal devices 102 and 104 to wirelessly access the core network via radio communications. The core network may provide switching, routing, and transmission, for traffic data related to terminal devices 102 and 104, and may further provide access to various internal data networks (e.g., control nodes, routing nodes that transfer information between other terminal devices on radio communication network 100, etc.) and external data networks (e.g., data networks providing voice, text, multimedia (audio, video, image), and other Internet and application data). In an exemplary short-range context, the radio access network provided by network access node 110 may provide access to internal data networks (e.g., for transferring data between terminal devices connected to radio communication network 100) and external data networks (e.g., data networks providing voice, text, multimedia (audio, video, image), and other Internet and application data).

The radio access network and core network (if applicable, such as for a cellular context) of radio communication network 100 may be governed by communication protocols that can vary depending on the specifics of radio communication network 100. Such communication protocols may define the scheduling, formatting, and routing of both user and control data traffic through radio communication network 100, which includes the transmission and reception of such data through both the radio access and core network domains of radio communication network 100. Accordingly, terminal devices 102 and 104 and network access node 110 may follow the defined communication protocols to transmit and receive data over the radio access network domain of radio communication network 100, while the core network may follow the defined communication protocols to route data within and outside of the core network. Exemplary communication protocols include LTE, UMTS, GSM, WiMAX, Bluetooth, WiFi, mmWave, etc., any of which may be applicable to radio communication network 100.

FIG. 2 shows an exemplary internal configuration of a communication device. The communication device may include a terminal device 102 according to some aspects, and it will be referred to as terminal device 102, but the communication device may also include various aspects of network access nodes 110, 120 as well. The terminal device 102 may include antenna system 202, radio frequency (RF) transceiver 204, baseband modem 206 (including digital signal processor 208 and protocol controller 210), application processor 212, and memory 214. Although not explicitly shown in FIG. 2, in some aspects terminal device 102 may include one or more additional hardware and/or software components, such as processors/microprocessors, controllers/microcontrollers, other specialty or generic hardware/processors/circuits, peripheral device(s), memory, power supply, external device interface(s), subscriber identity module(s) (SIMs), user input/output devices (display(s), keypad(s), touchscreen(s), speaker(s), external button(s), camera(s), microphone(s), etc.), or other related components.

Terminal device 102 may transmit and receive radio signals on one or more radio access networks. Baseband modem 206 may direct such communication functionality of terminal device 102 according to the communication protocols associated with each radio access network, and may execute control over antenna system 202 and RF transceiver 204 to transmit and receive radio signals according to the formatting and scheduling parameters defined by each communication protocol. Although various practical designs may include separate communication components for each supported radio communication technology (e.g., a separate antenna, RF transceiver, digital signal processor, and controller), for purposes of conciseness the configuration of terminal device 102 shown in FIG. 2 depicts only a single instance of such components.

Terminal device 102 may transmit and receive wireless signals with antenna system 202. Antenna system 202 may be a single antenna or may include one or more antenna arrays that each include multiple antenna elements. For example, antenna system 202 may include an antenna array at the top of terminal device 102 and a second antenna array at the bottom of terminal device 102. In some aspects, antenna system 202 may additionally include analog antenna combination and/or beamforming circuitry. In the receive (RX) path, RF transceiver 204 may receive analog radio frequency signals from antenna system 202 and perform analog and digital RF front-end processing on the analog radio frequency signals to produce digital baseband samples (e.g., In-Phase/Quadrature (IQ) samples) to provide to baseband modem 206. RF transceiver 204 may include analog and digital reception components including amplifiers (e.g., Low Noise Amplifiers (LNAs)), filters, RF demodulators (e.g., RF IQ demodulators)), and analog-to-digital converters (ADCs), which RF transceiver 204 may utilize to convert the received radio frequency signals to digital baseband samples. In the transmit (TX) path, RF transceiver 204 may receive digital baseband samples from baseband modem 206 and perform analog and digital RF front-end processing on the digital baseband samples to produce analog radio frequency signals to provide to antenna system 202 for wireless transmission. RF transceiver 204 may thus include analog and digital transmission components including amplifiers (e.g., Power Amplifiers (PAs), filters, RF modulators (e.g., RF IQ modulators), and digital-to-analog converters (DACs), which RF transceiver 204 may utilize to mix the digital baseband samples received from baseband modem 206 and produce the analog radio frequency signals for wireless transmission by antenna system 202. In some aspects baseband modem 206 may control the radio transmission and reception of RF transceiver 204, including specifying the transmit and receive radio frequencies for operation of RF transceiver 204.

As shown in FIG. 2, baseband modem 206 may include digital signal processor 208, which may perform physical layer (PHY, Layer 1) transmission and reception processing to, in the transmit path, prepare outgoing transmit data provided by protocol controller 210 for transmission via RF transceiver 204, and, in the receive path, prepare incoming received data provided by RF transceiver 204 for processing by protocol controller 210. Digital signal processor 208 may be configured to perform one or more of error detection, forward error correction encoding/decoding, channel coding and interleaving, channel modulation/demodulation, physical channel mapping, radio measurement and search, frequency and time synchronization, antenna diversity processing, power control and weighting, rate matching/de-matching, retransmission processing, interference cancelation, and any other physical layer processing functions. Digital signal processor 208 may be structurally realized as hardware components (e.g., as one or more digitally-configured hardware circuits or FPGAs), software-defined components (e.g., one or more processors configured to execute program code defining arithmetic, control, and I/O instructions (e.g., software and/or firmware) stored in a non-transitory computer-readable storage medium), or as a combination of hardware and software components. In some aspects, digital signal processor 208 may include one or more processors configured to retrieve and execute program code that defines control and processing logic for physical layer processing operations. In some aspects, digital signal processor 208 may execute processing functions with software via the execution of executable instructions. In some aspects, digital signal processor 208 may include one or more dedicated hardware circuits (e.g., ASICs, FPGAs, and other hardware) that are digitally configured to specific execute processing functions, where the one or more processors of digital signal processor 208 may offload certain processing tasks to these dedicated hardware circuits, which are known as hardware accelerators. Exemplary hardware accelerators can include Fast Fourier Transform (FFT) circuits and encoder/decoder circuits. In some aspects, the processor and hardware accelerator components of digital signal processor 208 may be realized as a coupled integrated circuit.

Terminal device 102 may be configured to operate according to one or more radio communication technologies. Digital signal processor 208 may be responsible for lower-layer processing functions (e.g., Layer 1/PHY) of the radio communication technologies, while protocol controller 210 may be responsible for upper-layer protocol stack functions (e.g., Data Link Layer/Layer 2 and/or Network Layer/Layer 3). Protocol controller 210 may thus be responsible for controlling the radio communication components of terminal device 102 (antenna system 202, RF transceiver 204, and digital signal processor 208) in accordance with the communication protocols of each supported radio communication technology, and accordingly may represent the Access Stratum and Non-Access Stratum (NAS) (also encompassing Layer 2 and Layer 3) of each supported radio communication technology. Protocol controller 210 may be structurally embodied as a protocol processor configured to execute protocol stack software (retrieved from a controller memory) and subsequently control the radio communication components of terminal device 102 to transmit and receive communication signals in accordance with the corresponding protocol stack control logic defined in the protocol software. Protocol controller 210 may include one or more processors configured to retrieve and execute program code that defines the upper-layer protocol stack logic for one or more radio communication technologies, which can include Data Link Layer/Layer 2 and Network Layer/Layer 3 functions. Protocol controller 210 may be configured to perform both user-plane and control-plane functions to facilitate the transfer of application layer data to and from radio terminal device 102 according to the specific protocols of the supported radio communication technology. User-plane functions can include header compression and encapsulation, security, error checking and correction, channel multiplexing, scheduling and priority, while control-plane functions may include setup and maintenance of radio bearers. The program code retrieved and executed by protocol controller 210 may include executable instructions that define the logic of such functions.

Terminal device 102 may also include application processor 212 and memory 214. Application processor 212 may be a CPU, and may be configured to handle the layers above the protocol stack, including the transport and application layers. Application processor 212 may be configured to execute various applications and/or programs of terminal device 102 at an application layer of terminal device 102, such as an operating system (OS), a user interface (UI) for supporting user interaction with terminal device 102, and/or various user applications. The application processor may interface with baseband modem 206 and act as a source (in the transmit path) and a sink (in the receive path) for user data, such as voice data, audio/video/image data, messaging data, application data, basic Internet/web access data, etc. In the transmit path, protocol controller 210 may therefore receive and process outgoing data provided by application processor 212 according to the layer-specific functions of the protocol stack, and provide the resulting data to digital signal processor 208. Digital signal processor 208 may then perform physical layer processing on the received data to produce digital baseband samples, which digital signal processor may provide to RF transceiver 204. RF transceiver 204 may then process the digital baseband samples to convert the digital baseband samples to analog RF signals, which RF transceiver 204 may wirelessly transmit via antenna system 202. In the receive path, RF transceiver 204 may receive analog RF signals from antenna system 202 and process the analog RF signals to obtain digital baseband samples. RF transceiver 204 may provide the digital baseband samples to digital signal processor 208, which may perform physical layer processing on the digital baseband samples. Digital signal processor 208 may then provide the resulting data to protocol controller 210, which may process the resulting data according to the layer-specific functions of the protocol stack and provide the resulting incoming data to application processor 212. Application processor 212 may then handle the incoming data at the application layer, which can include execution of one or more application programs with the data and/or presentation of the data to a user via a user interface.

Memory 214 may embody a memory component of terminal device 102, such as a hard drive or another such permanent memory device. Although not explicitly depicted in FIG. 2, the various other components of terminal device 102 shown in FIG. 2 may additionally each include integrated permanent and non-permanent memory components, such as for storing software program code, buffering data, etc.

In accordance with some radio communication networks, terminal devices 102 and 104 may execute mobility procedures to connect to, disconnect from, and switch between available network access nodes of the radio access network of radio communication network 100. As each network access node of radio communication network 100 may have a specific coverage area, terminal devices 102 and 104 may be configured to select and re-select \ available network access nodes in order to maintain a strong radio access connection with the radio access network of radio communication network 100. For example, terminal device 102 may establish a radio access connection with network access node 110 while terminal device 104 may establish a radio access connection with network access node 112. In the event that the current radio access connection degrades, terminal devices 102 or 104 may seek a new radio access connection with another network access node of radio communication network 100; for example, terminal device 104 may move from the coverage area of network access node 112 into the coverage area of network access node 110. As a result, the radio access connection with network access node 112 may degrade, which terminal device 104 may detect via radio measurements such as signal strength or signal quality measurements of network access node 112.

Depending on the mobility procedures defined in the appropriate network protocols for radio communication network 100, terminal device 104 may seek a new radio access connection (which may be, for example, triggered at terminal device 104 or by the radio access network), such as by performing radio measurements on neighboring network access nodes to determine whether any neighboring network access nodes can provide a suitable radio access connection. As terminal device 104 may have moved into the coverage area of network access node 110, terminal device 104 may identify network access node 110 (which may be selected by terminal device 104 or selected by the radio access network) and transfer to a new radio access connection with network access node 110. Such mobility procedures, including radio measurements, cell selection/reselection, and handover are established in the various network protocols and may be employed by terminal devices and the radio access network in order to maintain strong radio access connections between each terminal device and the radio access network across any number of different radio access network scenarios.

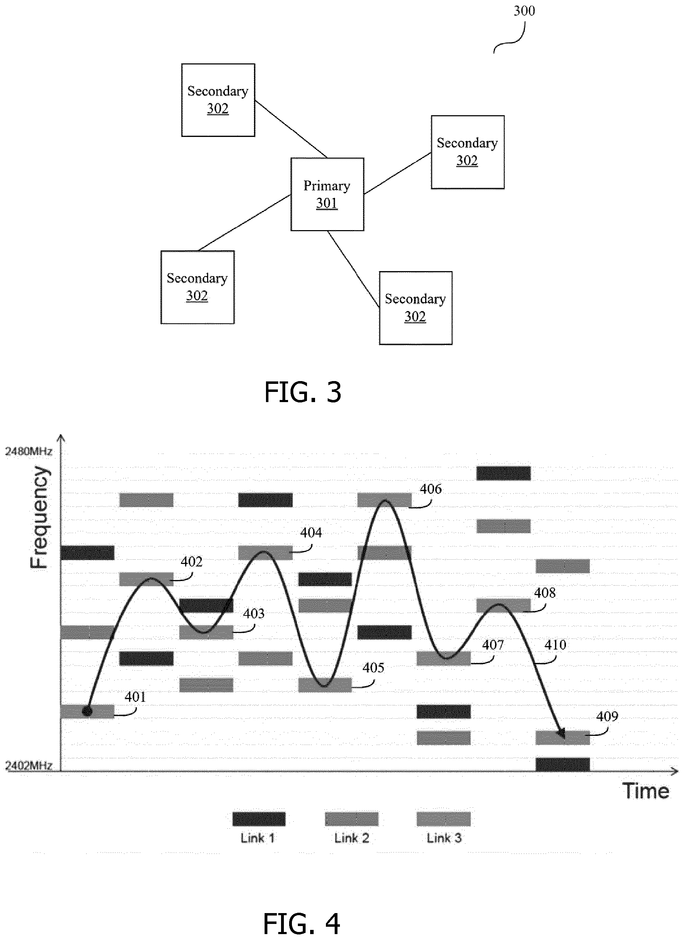

FIG. 3 shows an exemplary illustration of a network topology that communication devices may use. Communication devices may be configured to communicate within a network 300 (e.g. piconet for BT networks). Each communication device may undertake various roles within the network. For example, a communication device may operate as a primary device 301 (e.g. master device, central device) or a secondary device 302 (e.g. slave device, peripheral device). A primary device 301 may be a communication device that may initiate a connection request to another communication device that advertises its presence. A secondary device 302 may be a communication device that receives a connection request from a primary device 301.

Each secondary device 302 may be communicatively coupled to the primary device over an established connection, collectively forming the network 300. The primary device 301 may coordinate communication through the network 300. It may be possible for the primary device 301 and the secondary devices 302 to change the roles in-between, such that the primary device 301 may become a secondary device and one of the secondary devices 302 may become a primary device in the network 300 in various examples. In various examples, the primary device 301 may establish and maintain an order and a polling scheme, including designating time slots for the secondary devices 302. The number of secondary devices 302 in the network may vary. Furthermore, the network 300 may be communicatively coupled to another network over at least one of the devices resulting in a scatternet for BT devices. In a scatternet, a device that may be a primary device or a secondary device for one network, may act as a secondary device for another network. In such cases, the device may employ time multiplexing to transmit/send radio communication signals to multiple networks.

In some examples, devices of the network 300 may employ a channel-hopping mechanism (or frequency-hopping mechanism). In a channel-hopping mechanism, available radio resources is divided in multiple radio communication channels (e.g. RF channels or subbands), and the transmitting entity and the receiving entity (or entities) may change (i.e. "hop") the carrier frequency in time among many distinct RF channels from the multiple RF channels according to a predetermined order (e.g. "a hop pattern" or a "hop sequence"). Accordingly, even if there is a transmission via an RF channel having considerable interference, the effect of the interference may be limited due to limited use of that particular channel. This mechanism may also be referred to as frequency-hopping spread spectrum.

The communicating entities (i.e. transmitting entity and receiving entity) may have the knowledge of the predetermined order of the hopping, which may be referred to as a channel hopping sequence (or pattern) or a frequency hopping sequence (or pattern) in this disclosure. A channel hopping sequence may represent an allocation of multiple RF channels in multiple time slots. The channel hopping sequence may simply include information representing an order of RF channels to be used, and the respective communicating entity may accordingly change the RF channels based on the provided order according to a predefined time slot. In some examples, the channel hopping sequence may also include time information representing duration of time slots, or representing when the hop is to be performed.

FIG. 4 shows an exemplary illustration of RF channels used by three established links based on a channel hopping mechanism. The illustration intends to provide a channel hopping example, in particular according to an adaptive channel hopping, for BT technology. Accordingly, the available RF spectrum between 2402 MHz and 2480 MHz is divided into multiple RF channels. Assuming that the channel hopping sequence 410 illustrated herein is for communication between a primary device (e.g. the primary device 301) and a secondary device (e.g. the secondary device 302) collectively are to be referred to as devices, the devices may accordingly communicate via a first RF channel at a first time slot 401, then via a second RF channel at a second time slot 402, then via a third RF channel at a third time slot 403, and so on for all illustrated time slot and RF channel pairs 404, 405, 406, 407, 408, 409.

For a group of communicating devices, the operation may, in addition to the designated channel hopping sequence 410, include synchronization according to a common clock. The primary device may provide the synchronization reference, and the secondary devices that are configured to communicate with the primary device may follow their designated hopping pattern according to the provided synchronization reference. The BT technology mainly supports a first hopping mechanism (e.g. a basic hopping pattern, BFH) in which 79 RF channels in BR/EDR or 37 RF channels in LE, and pseudo-randomly ordered, and a second hopping mechanism (e.g. an adaptive hopping pattern, AFH), which the primary device may adapt, for each secondary device, by excluding a subset of frequencies from the pseudo-random ordering. Many aspects of channel hopping mechanisms are similar for BR/EDR and LE and aspects provided herein are applicable, in general, for both BR/EDR or LE, unless explicitly indicated otherwise. Furthermore, while the devices changing the RF channels, logical links are maintained to provide flow of data between the devices.

For AFH in BR/EDR, a primary device may select RF channels pseudo-randomly from the available RF channel list, where all RF channels in a channel map are given near equal priority. In most implementations, the primary device may identify good and bad RF channels, and the primary device may exclude the bad channels completely from the availability list by blacklisting them, or in other words, the primary device may select RF channel only from good RF channels. Such approach may result in underutilization of available RF spectrum which may also be a potential problem while enabling Multiple BLE connections. BFH/AFH, in general, do not allow ranking of RF channels within the channel map. RF channels are simply associated with a binary option, namely good or bad, and quality of RF channels respectively is usually not taken into consideration while deciding the hopping sequence. Thus, it may be desirable to implement a channel hopping mechanism which may be also optimal for supporting Multi BLE connections.

In order to distinguish "good RF channels" and "bad RF channels", the primary device may obtain a channel map (e.g. AFH_channel_map information). The obtained channel map is representative of which RF channels are to be used, and/or which RF channels are to be unused. In order to generate the channel map, the devices may individually determine whether an RF channel is classified as a good channel or a bad channel based on local information, such as using a channel assessment method or via a received HCI). The secondary devices may provide information representing their determinations to the primary device.

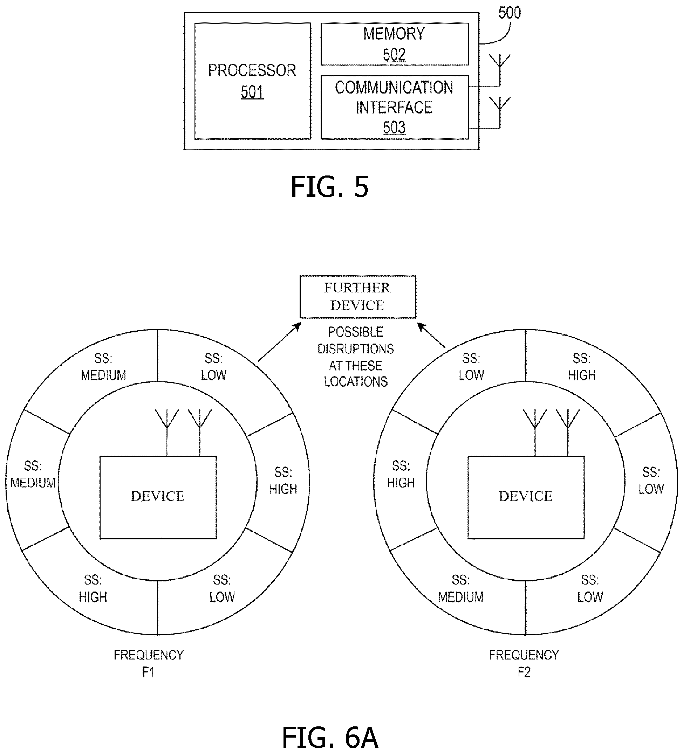

FIG. 5 shows an exemplary apparatus for a communication device. The apparatus 500 may include a processor 501. The processor 501 may include a central processing unit, a graphics processing unit, a hardware acceleration unit, a neuromorphic chip, and/or a controller. The processor 501 may be implemented in one processing unit, e.g. a system on chip (SOC), or an integrated system or chip. The processor 501 may include more than one processing unit configured to provide various aspects as mentioned herein. In various examples, the communication may include the apparatus 500, and the processor 501 may be one or more processors of the communication device (e.g. application processor 212 and optionally protocol processor 210 and digital signal processor 208 as exemplarily provided with respect to FIG. 2).

The apparatus 500 may further include a memory 502 to store data. The memory 502 may store an operating system (not shown) including instructions configured to manage various operations of the processor 501, the memory 502, and the communication interface 503, and may further manage operations of the communication device. The processor 501 and memory 502 (and also other various components of the apparatus) and other entities may be communicatively coupled over an internal interface to communicate with each other (e.g. a bus, wires, etc.).

The communication interface 503 may cause the apparatus 500 to communicate with further devices (e.g. other communication devices), and accordingly the processor 501 may manage the communications with other communication devices for the communication device 500. The communication interface 503 various components, as exemplarily provided in accordance with FIG. 2, such as antenna system 202 including an antenna, radio frequency (RF) transceiver 204, baseband modem 206 (including digital signal processor 208 and protocol controller 210).

In various examples, the apparatus 500 is an apparatus of a BT communication device and the communication interface 503 may be configured to transmit and/or receive radio communication signals, via one or more antennas, according to BT communication protocol. The communication interface 503 may include a separate application processor, and memory, or in various examples, the processor 501 and the memory 502 may provide functions of an application processor and memory for communication purposes for the BT communication protocol. The communication interface 503 may further be configured to perform communications according to another communication protocol. Accordingly, the communication interface 503 may include multiple transceivers, each transceiver being configured to operate for a particular radio communication protocol.

In various examples in which the apparatus is for a BT communication device, the processor 501 may perform BT host functions and BT controller functions of a BT protocol stack. The communication interface 503 may include a BT radio circuitry configured to transmit and/or receive BT radio communication signals.

In various examples, the apparatus 500 is an apparatus of a WLAN communication device and the communication interface 503 may be configured to transmit and/or receive radio communication signals, via one or more antennas, according to an IEEE 802.11 communication protocol. The communication interface 503 may include a separate application processor, and memory, or in various examples, the processor 501 and the memory 502 may provide functions of an application processor and memory for communication purposes for the IEEE 802.11 communication protocol. The communication interface 503 may further be configured to perform communications according to another communication protocol. Accordingly, the communication interface 503 may include multiple transceivers, each transceiver being configured to operate for a particular radio communication protocol.

In various examples in which the apparatus is for a WLAN communication device, the processor 501 may perform functions of an IEEE 802.11 protocol stack. The communication interface 503 may include a WLAN radio circuitry configured to transmit and/or receive WLAN radio communication signals.

In various examples, communication interface 503 may be configured to transmit and/or receive radio communication signals via one or more antennas, according to a cellular communication technology, such as LTE, 5G/NR, 6G, etc., as illustratively described in detail in accordance with FIG. 2.

In some examples, the communication circuitry 503 may be configured to transmit and/or receive radio communication signals of different radio access technologies. Illustratively, the communication interface 503 may include a WLAN unit for WLAN communication, a BT unit for BT communication, and a cellular communication unit for cellular communication, and one or more further units for one or more further radio technologies.

In accordance with various aspects described herein, the communication device may perform operations to improve connection issues and disruption in the connectivity at certain locations within the communication environment of which the communication device is provided within, or based on mobility within the environment, illustratively when a user of a mobile device, which may be the communication device or a further communication device connected to the communication device, changes location within the environment. For example, the communication environment may be a WLAN or BT environment. Illustratively, a user may experience such disruptions and issues in the form of connection drops, disconnections, noisy audio calls etc., which may reduce the QoE.

In accordance with various aspects provided herein, the processor may determine a radiation pattern for a plurality of available channels associated with the supported short-range wireless communication technology, illustratively described as BT or WLAN in this disclosure. A radiation pattern may refer to a radiation map representative of the signal strength or radiation pattern of further short-range wireless communication devices within a particular area or environment, which the short-range wireless communication devices may illustratively include further BT devices and/or WLAN devices. The radiation pattern may indicate the signal strength and/or radiation pattern of further short-range wireless communication devices in multiple directions relative to the communication device.

Aspects in this context are to be described by referring to the apparatus 500 described in accordance with FIG. 5. It is to be noted that, although aspects described in this context may be combined and co-exist with further aspects provided in this disclosure, examples provided herein may also be implemented in a communication device only for the aspects described in this context.

In some examples, the radiation pattern may be a visual depiction or a graphical representation. The radiation map may illustrate the distribution of short-range wireless communication signals within multiple directions, and it may indicate areas of stronger or weaker signal coverage, dead zones, interference patterns, and variations in signal strength across different locations within the mapped area around the communication device.

In accordance with various aspects provided herein, the radiation map may provide valuable insights into how signals of the short-range wireless communication network may propagate in a given space, and it may help to identify optimal placement for devices, potential signal obstructions, and areas with high interference. The communication device may obtain the radiation pattern through signal strength measurements taken.

For this purpose, the communication interface 503 may include a measurement circuitry configured to perform measurements over received radio communication signals. The processor 501 may determine measured levels based on measurements performed by the communication interface 503. In some examples, the processor 501 may store the measured levels into the memory 502. Further, the processor 501 may analyze the measured levels and generate a visual representation of the measurements.

Illustratively, the measurements may include signal strength measurements. The measurement circuitry may measure strength of a received signal and the processor may determine, for example, received signal strength indicators (RSSIs). Additionally or alternatively, the measurement circuitry may measure interference and intensity of other signals or electromagnetic interference that may affect communication signals. Additionally, or alternatively, the measurement circuitry may measure available channel bandwidth of the corresponding short-range wireless communication technology. Additionally, or alternatively, the measurement circuitry and the processor may measure actual data transmission rates and/or throughputs.

In accordance with various aspects provided herein, the processor 501 may cause the measurement circuitry to perform measurements for a plurality of directions relative to the antenna and/or the communication device (e.g. around the communication device).

The short-range wireless communication technology may support communication in multiple channels, each being associated with a corresponding carrier frequency for radio communication signals and a bandwidth (i.e. a subband). Illustratively, both BT and WLAN may operate in the 2.4 GHz ISM (Industrial, Scientific, and Medical) band and, in some cases, in the 5 GHz band for WLAN (specifically in the case of 802.11a, 802.11ac, etc.). These bands are divided into channels, each occupying a specific frequency range within the frequency spectrum.

For example: In the 2.4 GHz ISM band used by older WLAN standards like 802.11b/g/n, the available frequency band is divided into separate channels, each with a certain frequency range (e.g., channel 1, channel 6, channel 11, etc.). Channels may have specific frequency ranges but may also overlap to some extent. In the 5 GHz band used by newer WLAN standards like 802.11a/ac/ax, there are more available channels with larger non-overlapping frequency ranges compared to the 2.4 GHz band. In Bluetooth Low Energy (BLE), there are 40 channels available, each with its own frequency. The BR/EDR, on the other hand, may use a different scheme with 79 channels, also within the 2.4 GHz band.

In accordance with various aspects provided herein, the processor 501 may cause the measurement circuitry to perform measurements on a plurality of channels to obtain the radiation pattern. Accordingly, the radiation pattern, in accordance with various aspects provided herein, may indicate a corresponding quality metric, such as a signal strength, for a corresponding channel of multiple channels and a corresponding direction of multiple directions. The quality metric may indicate a radio quality degree. Illustratively, in a simple example, the radiation pattern may indicate whether estimate radio communication quality using a channel of multiple channels is "good quality" for a direction of multiple available directions, or "bad quality".

In some examples, the processor 501 may encode obtained radiation pattern for a transmission to another communication device. In some examples, the processor 501 may decode information received, via the communication interface, from another communication device, which the decoded information may include further quality metrics determined by the another communication device for one or more channels and one or more directions relative to the another communication device (e.g. a further radiation pattern obtained by the another communication device).

Accordingly, the processor 501 may obtain the radiation pattern based on quality metrics for one or more channels determined by the processor 501, and further based on quality metrics for one or more channels received by one or more further communication devices. The processor 501 may combine obtained quality metrics based on locations of the one or more further communication devices. For this purpose, the communication device and the one or more further communication devices may exchange their location information.

FIG. 6A shows an example of an illustration of two radiation patterns obtained at two channels separately. Illustratively, the processor 501 may obtain a first radiation pattern at a first channel and a second radiation pattern at a second channel. The term signal strength has been abbreviated as "SS". As illustrated, each section refers to a direction relative to the communication device and indicates whether the signal strength is low, medium, or high at that direction for the respective channels F 1 and F2.

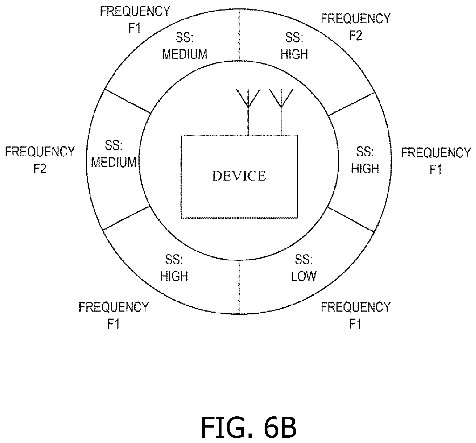

FIG. 6B shows another example of an illustration of a radiation pattern combined for two channels. Illustratively, the illustrated radiation pattern is a combination of the first radiation pattern and the second radiation pattern. It is to be noted that this radiation pattern illustrates a combination configuration in which each direction is associated with a quality metric of a channel having highest quality metric among all channels, but this should not be taken as a limitation. The processor 501 may use determined quality metrics for combination. For example, the combined radiation pattern may have indicated, such that each direction is associated with a quality metric of a channel having lowest quality metric, etc., or all quality metrics associated with all channels at all directions, or a subset of all quality metrics.

In accordance with various aspects provided herein, communication devices may exchange information to identify on which channel or channels of the available channels is a communication device is to perform measurements. Illustratively, the processor 501 may determine one or more channels for the communication device, such that the processor 501 may cause the measurement circuitry and/or the communication interface 503 to perform measurements on the one or more channels. Furthermore, the processor 501 may determine one or more further channels for another communication device, and encode information representing the one or more further channel, so that the another communication device may perform measurements on the one or more further channels and report back obtained quality metrics.

In accordance with various aspects provided herein, once the processor 501 obtains a radiation pattern, the processor 501 may further adjust quality metrics based on communication operations performed by the communication interface 503. Illustratively, the processor 501 may identify an increase and/or decrease at channel quality over an established communication link with a further communication device located at a particular direction relative to the communication device. Based on the identification, the processor 501 may adjust the respective quality metric associated with the channel and the direction.

Illustratively, the processor 501 may cause the measurement circuitry to perform measurements of designated channels at designated intervals, noting that an interval having shorter time periods may occupy the communication interface 503 and trade-off radio communication to be performed to exchange data. Within each interval, the processor 501 may update quality metrics based on further information, such as radiation patterns received from other communication devices, further measurements performed during normal course of wireless communication, such as RSSIs obtained for communication links between the communication device and further communication devices, etc.

In accordance with various aspects provided herein, the processor 501 may establish a physical link with a further communication device based on the radiation pattern. Illustratively, the processor 501 may determine a channel (e.g. frequency) for the physical link to be established with the further communication device based on the radiation pattern. The processor 501 may select a channel from available channels, which have the best quality metrics among the quality metric of the available channels. The processor 501 may accordingly configure the link to be established according to the selected channel.

The processor 501 may establish the physical link based on a location of the further communication device. For this purpose, the processor 501 may determine a location of the further communication device. For example, the memory 502 may store information representative of a location of the further communication device. The location may be an absolute location (e.g. coordinates) or a location relative to the communication device. The location may be indicative of a direction relative to the communication device. Accordingly, the processor 501 may determine a channel for the further communication device based on the location of the further communication device, by selecting a channel from available channels having a quality metric above a threshold for the direction which the further communication device is located relative to the communication device. In some examples, the processor 501 may select the channel having the best quality metric at the direction which the further communication device is located.

For example, a connection request (e.g. an advertisement packet, a beacon) received from a further communication device may indicate a location of the further communication device. Additionally, or alternatively, the connection request may include an identifier to identify the further communication device, and the processor 501 may determine the location of the further communication device based on the identity of the further communication device and a predefined or predetermined location of the further communication device.

In some examples, the processor 501 may predict a location of the further communication device based on stored information within the memory 502, which the stored information may include information representative of past location history of the further communication device. Accordingly, the processor 501 may predict the location of the further communication device and accordingly a direction relative to the communication device for the predicted location.

In accordance with various aspects provided herein, the processor 501 may have an established physical link with the further communication device. The established physical link may be configured to use a first channel (e.g. a first one or more channels). The processor 501 may determine a second channel (e.g. a first one or more channels) for the established physical link based on the radiation pattern, and optionally the location of the further communication device. Illustratively, the second channel may include one or more channels having better quality metrics than the first channel. The processor 501 may accordingly configure the established physical link to communicate using the second channel.

The processor 501 may determine a second channel for an established physical link adaptively, for example based on link quality of the established physical link. The processor 501 may determine that the link quality of the established physical link is decreasing for a period of time, or has decreased below a predetermined link quality threshold. In response to the determination of a worse link quality, the processor 501 may determine the second channel for the established physical link and configure the established physical link to communicate using the second channel. The processor 501 may maintain logical links associated with the established physical link.

In some examples, the processor 501 may determine the second channel for the established physical link in response to updated radiation pattern quality metrics. The processor 501 may determine that there are channels for the corresponding direction of the further communication device having better quality metrics in an updated radiation pattern.

Illustratively, the further communication device (or the communication device) may be a mobile device, which may move within the communication environment. The processor 501 may determine the second channel for the established physical link, when the processor 501 identifies that the further communication device is predicted to be located at a direction having quality metrics based on a threshold.

In accordance with various aspects provided herein, the communication interface 503 may be configured to communicate, via an established physical link, with a channel hopping mechanism, as illustratively described in FIG. 4. The processor 501 may, based on the radiation pattern, determine a plurality of channels to be used for the channel hopping mechanism. Illustratively, the plurality of channels may be channels of a channel hopping sequence to be used by the communication device to communicate with the further communication device. For example, the processor 501 may allocate the plurality of channels into a number of time slots to obtain a channel hopping sequence.

The processor 501 may determine the plurality of channels based on the radiation pattern by selecting a subset of available channels, each channel may be associated with a corresponding quality metric that is above a threshold which may be a predefined or a predetermined threshold. In some examples, the processor 501 may determine a number N of channels by selecting best performing N channels (i.e. having best quality metrics indicative of best radio quality) from the channels provided in the radiation pattern. Illustratively, the processor 505 may determine the plurality channels for a communication with a further communication device located at a direction relative to the communication device by selecting channels and quality metrics provided in that direction.

Accordingly, the processor 501 may configure the communication interface 503 to communicate with the further communication device over established further physical links using the determined plurality of channels. Illustratively, the communication interface 503 may use selected channels to communicate with the further communication device with a frequency hopping mechanism. The processor 501 may maintain one or more logical links established with the further communication device, while the communication interface 503 performs the frequency hopping mechanism. In some examples, the frequency hopping mechanism may be configured to select frequencies among a set of frequencies regarded as "good channels". In some aspects, the processor 501 may include the determined plurality of channels into the set of "good channels", among which a frequency hopping algorithm selects channels for frequency hopping.

In accordance with various aspects provided in this disclosure, the processor 501 may determine data for assessment of available communication channels within an environment. The data for assessment of available communication channels may be referred to as channel assessment data. The channel assessment data may include information representative of radio quality of the corresponding channel (i.e. channel quality metric) for a plurality of channels. In some examples, the channel assessment data may include available channels of different radio access technologies (RATs), illustratively including BT, WLAN, cellular, etc. In some examples, the channel assessment data may include information representative of radio quality of all available channels of multiple RATs. Through obtaining a blanket channel assessment of entire RF frequency band designated for wireless communication within the respective environment, the communication device may recommend channels and communication configurations to further communication devices. In some examples, the channel assessment data described herein may be accessible via a cloud service and provide channel assessments and recommendations to further communication devices.

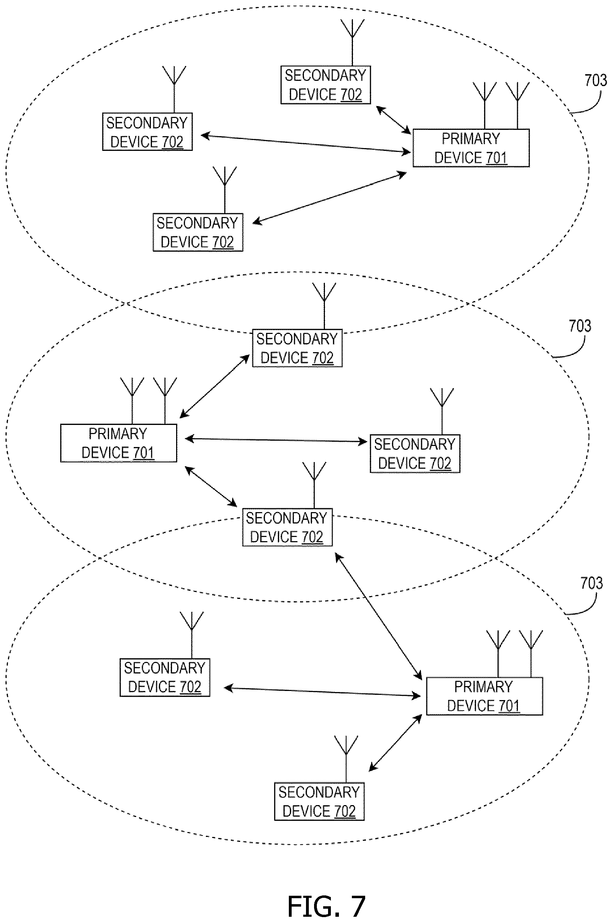

FIG. 7 shows an exemplary illustration of a short-range wireless network environment including multiple short-range wireless networks. The illustration includes multiple primary communication devices 701 and multiple secondary communication devices 702 having established connections with the multiple primary communication devices 701 respectively. Each primary communication device 701 may provide a network connection service according to at least one radio technology within a particular location defined as a radio zone 703. One of the primary communication devices 701 may include the apparatus 500, and may be referred to as the communication device. In that case, other primary communication devices may be referred to as further primary communication devices, noting that they may also include an apparatus as described the apparatus 500.

In accordance with various aspects described herein, the processor 501 may obtain channel assessment data through its operation for a plurality of channels. For example, the processor 501 may obtain channel assessment data based on measurements described above to obtain the radiation pattern. The processor 501 may determine a quality metric to represent radio quality for each channel of a plurality of channels.

Furthermore, the processor 501 may further obtain channel assessment data of channel assessments performed by further communication devices within the environment. For this purpose, the processor 501 may exchange information with further primary communication devices 701 within the environment. Further primary communication devices 701 may include primary devices and/or network access nodes of various short-range wireless communication technologies. For example, primary communication devices 701 may include BT primary devices within the environment that the communication device is aware of. Furthermore, primary communication devices 701 may include WLAN access points (APs) configured to communicate according to IEEE 802.11 communication protocol. The processor 501 may receive channel assessment data of further primary communication devices 701 via the communication interface 503.

For this purpose, communication interfaces of the primary communication devices may perform channel measurements of designated RF channels to obtain channel quality metrics. Communication interfaces (e.g. the communication interface 503) may include a measurement circuit configured to measure received radio communication channels. Based on the measured radio communication channels, a processor of the primary communication device (e.g. the processor 501) may determine, and accordingly obtain, channel quality metrics for the measured radio communication channels. Furthermore, the respective processor may obtain channel quality metrics for one, some, or all available RF channels from a further communication device, which the communication device may communicate.

Each obtained channel quality metric may represent a quality of an RF channel of a plurality of RF channels. In some examples, the obtained channel metric may represent the quality of each RF channel in a non-binary manner, exemplarily with at least three levels designated to represent the channel quality. In some examples, the respective processor may perform calculations to determine channel quality metrics for respective RF channels based on at least one of a signal to noise ratio (SNR), an estimated or measured received signal strength indication (RSSI), an estimated or measured packet error rate (PER) or a bit error rate (BER), other co-existing radio access technologies (RATs), an estimated network traffic classification, an estimated or measured QoS metric, of or associated with the respective channel. The respective processor (or the processor 501 after obtaining channel assessment data) may calculate each channel quality metric based on a predefined mapping operation including one, all, or a combination of these parameters.

In some examples, the communication device may orchestrate channel assessment operation throughout the environment by communicating further primary communication devices. Illustratively, the processor 501 may encode messages to configure further primary communication devices 701 to perform channel measurements to obtain their respective channel assessment data in designated intervals. For example, the processor 501 may encode message to indicate to the further primary communication devices 701 that channel measurements are to be performed every T ms., for example every 5 seconds. Accordingly, further primary communication devices 701 may perform their channel measurements and send their respective channel assessment data to the communication device regularly to maintain timely information.

Furthermore, the processor 501 may exchange information with further secondary communication devices 702 within the environment. Further secondary communication devices 702 may include secondary devices and/or terminal devices (e.g. non-AP station devices (STAs)) of various short-range wireless communication technologies. For example, secondary communication devices 702 may include BT secondary devices within the environment that the communication device is aware of. Furthermore, secondary communication devices 702 may include WLAN non-AP STAs configured to communicate according to IEEE 802.11 communication protocol. The processor 501 may receive channel assessment data of further secondary communication devices 702 via the communication interface 503.

The processor 501 may encode messages to request channel assessment-related data from secondary communication devices 702 having an established connections with the communication device. Channel assessment-related data from secondary communication devices 702 may include any type of information that a secondary communication device 702 may provide that may indicate quality of channel between the respective secondary communication device 702 and a primary communication device 701 to which the secondary communication device 702 is connected to. Illustratively, secondary communication devices 702 may provide information representing packet error rates associated with channels used by the secondary communication devices 702.

Further, the processor 501 may encode messages to configure further primary communication devices 701 to obtain channel assessment-related data from respective secondary communication devices 702 having established connections to the further primary communication devices. Further primary communication devices 701 may configure their respective secondary communication devices 702 as described above for the communication device. Accordingly, the processor 501 may obtain channel assessment-related data of further secondary communication devices 702 connected to the further primary communication devices 701 by receiving channel assessment data of further primary communication devices 701. In other words, channel assessment data received from the further primary communication devices 701 may include channel assessment-related data of further secondary communication devices 702.

Accordingly, the processor 501 may collect channel quality metrics from both the primary communication devices (e.g. central devices) and the secondary communication devices (e.g. peripheral devices) and aggregate the collected channel quality metrics (i.e. obtained channel assessment data) to generate an aggregated channel assessment data, which may also be referred to as channel assessment data in accordance with various aspects described herein unless otherwise.

It is to be noted that, as described herein, the channel assessment data may not just use a single technology-based radio network but a combination of all channel assessment data obtained across heterogeneous radio technologies. It is to be noted that, although WLAN and BT have been used to describe various aspects as examples, this should not be taken as limiting. The channel assessment data may include channel quality metrics of cellular channels, illustratively for LTE or 5G communication, and the like.

In accordance with various aspects provided herein, the processor 501 may analyze the channel assessment data (e.g. aggregate channel assessment data) and determine channel recommendations by selecting one or more channels from available channels within each radio zone 703. Illustratively, channel recommendations for a radio zone may include indication of one or more channels having best channel quality metrics for the radio zone, exemplarily based on the channel assessment data received from the respective primary communication device providing network service to the radio zone.

For an illustrative example, further radio communication devices having established connections to receive respective network services within a radio zone may select and/or request channels for established connections, or for connections to be established, based on these recommendations. Additionally, or alternatively, further radio communication devices attempting to connect to a short-range wireless network of a radio zone may select and/or request channels to establish connections. In some examples, the channel recommendations may include information indicating whether a channel has a good radio quality or a bad radio quality for all channels.

In some examples, the processor 501 may determine channel recommendations based on further contextual information, including location of radio zones, possible interferences that may be formed between primary communication devices of radio zones, functionalities and/or capabilities designated for radio zones, and predefined use cases associated with use of radio communication within radio zones, such as application layer requirements and/or constraints.

In accordance with various aspects provided herein, the processor 501 may generate a channel assessment table including the channel assessment data and channel recommendations. Any further communication device may access the channel assessment table and configure their communication operations within the network environment based on the channel assessment table. Illustratively, the communication device and any further primary communication devices 701 may assign channels to established connections, and/or establish new connections based on the channel assessment table, in particular based on channel recommendations.

In an example, the processor 501 may further provide an access to the channel assessment table for the further communication devices within the network environment. Illustratively, any further communication device, either having an established connection or attempting to establish a connection within the network environment may access the channel assessment data. In an example, the apparatus or the communication device may include a server connected to the network, to which any further communication device may access and obtain the channel assessment table. In an example, the processor 501 may upload the channel assessment table into a cloud server.

In each case, a newly arrived further communication device entering into the environment, and/or a further communication device attempting to connect to the networks in one of the radio zones may access to the channel assessment table via accessing predefined and/or predetermined network locations (i.e. a domain name, an internet protocol address, a cloud service address, etc.). In some examples, the primary communication devices 701 may broadcast information representing the network location and/or the channel assessment table itself, or may encode the channel assessment table and/or the network location within a message sent in response to any connection request (e.g. advertisement packet and/or beacon). In some examples, the primary communication device 701, in particular the processor 501, may be configured to detect further communication devices entering into the network environment (e.g. into any radio zones) via wireless sensing methods, illustratively through BT/WLAN beamforming.

The processor 501 may determine a location of the new further communication device and encode a message indicating recommended channels for the radio zone. In some examples, the processor 501 may determine if a radio zone within a designated proximity to the new further communication device may be associated with an identified disturbance or distortion with respect to a designated use case (e.g. the new further communication device has a conference call application exchanging data), if the new further communication device is within the designated proximity to the radio zone, the processor 501 may encode a message indicating that the radio zone may reduce QoE.

Accordingly, when a new further communication device enters a radio zone, the new further communication device may access to the channel assessment table to assess if entering into that particular zone may cause a disruption. This may serve as a pre-warning for that device and may allow row for mitigation, such as bit rate reduction, altering of connection parameters, etc. Through access to the channel assessment table, the new further communication device may have an accurate and updated channel map as an input for that particular radio zone. The new further communication device may accordingly use a selection of best performing channels within the radio zone for an adaptive frequency hopping.

Similarly, the processor 501 may also determine a set of channels within its radio zone as good channels based on their channel quality metrics. Illustratively, the processor 501 may determine a number N of channels having the best quality metrics, or having channel quality metrics above a predetermined or predefined threshold. The processor 501 may perform an adaptive channel hopping algorithm which performs selections of channel frequencies for channel hoping mechanism among the determined N channels.

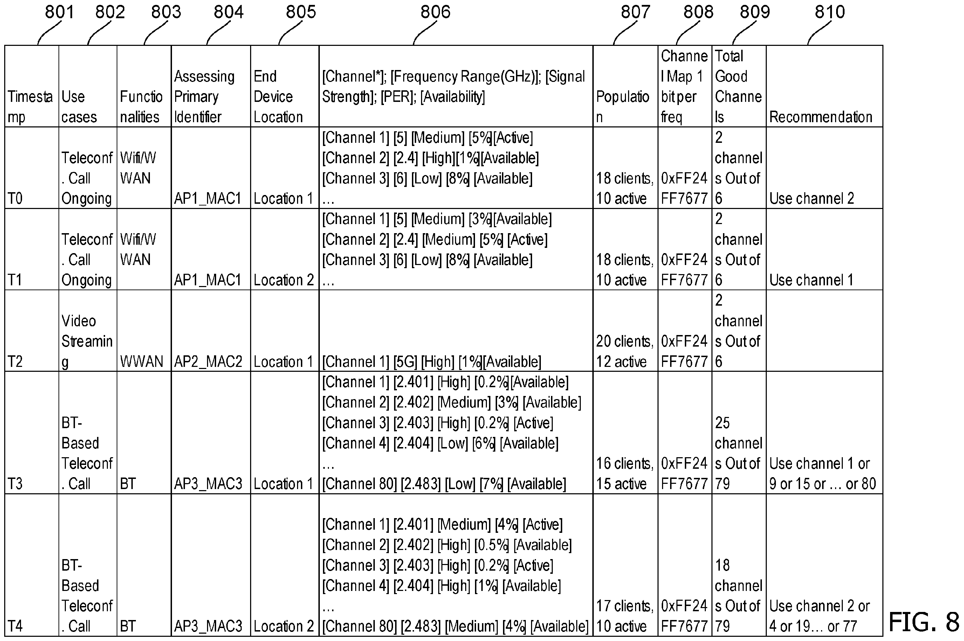

FIG. 8 shows an exemplary illustration of a channel assessment table. As illustrated herein, the channel assessment table may include a timestamp 801 indicating a time for the respective channel assessments. The table may further include information indicating designated use cases 802 associated with the channel recommendations within the particular radio zone. The table may further include communication functionalities/capabilities 803 for the radio zone. The table may further include identifier for the source 804 of the channel assessment. The table may further include location 805 of the corresponding primary or secondary communication device associated with the assessment. The table may further include a tuple 806 indicative of channel and channel quality metrics. The table may further include information 807 indicating number of communication devices and active connections within the radio zone. The table may further include channel map 808, a total number 809 of good channels and channel recommendations 810.

In accordance with various aspects described herein, the communication device including the apparatus 500 may be a device of a multi-device ecosystem, which communicates with further communication devices within the multi-device ecosystem via short-range wireless communication operations. A multi-device ecosystem may refer to an environment or interconnected network comprising multiple devices, illustratively from diverse manufacturers and running different operating systems or protocols, that can communicate, interact, and work together seamlessly. Such an ecosystem may allow various devices to interoperate and share data, enabling users to access services and information across multiple devices in a unified and interconnected manner.

Aspects in this context are to be described by referring to the apparatus 500 described in accordance with FIG. 5. It is to be noted that, although aspects described in this context may be combined and co-exist with further aspects provided in this disclosure, examples provided herein may also be implemented in a communication device only for the aspects described in this context.

In a multi-device ecosystem, devices such as smartphones, tablets, laptops, smartwatches, smart home devices, IoT (Internet of Things) gadgets, and others may collaborate and exchange information. These devices might communicate through various connectivity technologies like BT, WLAN, Zigbee, or other wireless or wired protocols, forming a short-range wireless network where data and functionalities may be shared among them. The aim of such ecosystems may be to provide users with a cohesive and integrated experience across their devices, allowing for synchronization of data, seamless transitions between devices, and the ability to control or access one device from another. For instance, a user might start a task on their smartphone and seamlessly continue it on their laptop or smart speaker without any disruption.

In accordance with various aspects provided herein a task may be any task that may be performed in a multi-device ecosystem. Illustratively, a task may include a task instructed by a user of the multi-device ecosystem in a computing environment, such as calculations, processing, video streaming, audio streaming, file sharing and transfer, cross-device document editing, smart home control, cross-platform messaging and communication, remote desktop access, cross-device gaming, health and fitness tracking, navigation and location sharing, calendar and task management, multi-device web browsing, voice assistant integration, wireless screen mirroring/casting, cloud-based note-taking and organization, illustratively any task which may be performed by different communication devices in an environment.

In a typical multi-device ecosystem, it may be desirable to switch between devices dynamically to give users optimized and the best user experience. Traditionally, switching between devices may require manual intervention and operations, which may become cumbersome and such manual interventions may not be reliable as desired, because they generally depend on experimenting and trials.

Illustratively, the processor 501 may interoperate and share data across multiple further communication devices to access services and collaborate through various mechanisms and protocols supported by short-range wireless communication technologies, such as BT and WLAN. The processor may use a unified authentication mechanism to authenticate a user. In accordance with various aspects, the apparatus 500 may further include input and output devices, for example to provide a user interface by which a user can interact with the communication device (e.g. a keyboard, a mouse, and a display for the case that the communication device is a computer). Once a user logs into the communication device via the user interface, authentication of the user may propagate across further communication devices to enable seamless access to shared services, cloud storage, or applications without the need for repeated logins. For this purpose, the processor 501 may encode information indicative of an authenticated user to the further communication devices within the short-range wireless network.

Furthermore, the processor 501 may synchronize user information such as contacts, calendars, and documents, across the further communication devices, illustratively in real-time. For instance, changes made to a document on a laptop may reflect instantly on a smartphone or tablet within the short-range wireless communication network to ensure consistency and accessibility regardless of the device used. Moreover, the processor 501 may support cross-platform application integration through which a user may start an activity at a further communication device and continue on the radio communication device and/or vice versa. For example, the user may begin watching a video on the communication device and may continue watching the video on a further communication device.

Similarly, the processor 501 may support orchestration of continuity of tasks through which a user may initiate a task at one communication device and encode messages about the initiated task to further communication devices, so that the user may continue working on another communication devices. For example, the user may start writing an email on the communication device and continue writing on the email on a further communication device. Furthermore, the processor 501 may share resources, such as some input and/or output devices (e.g. printers, audio output devices, e.g.) connected to the communication device and may use shared input and/or output devices by the further communication devices.

There are various methods and use cases associated with the multi-device ecosystems, and the communication device may be configured for any conventional use cases. In essence, these functionalities and features may empower users to seamlessly move between devices, access shared information and services, and collaborate effectively, creating a cohesive and interconnected digital experience across the multi-device ecosystem. The interaction and data sharing among devices enable users to leverage the capabilities of each device while maintaining continuity and consistency in their digital activities.

In accordance with various aspects described herein, in case of continuity of tasks on different communication devices, communication devices of the multi-device ecosystem may hand off tasks to each other to ensure the continuity of tasks in another communication device. Aspects associated with handing off tasks are described herein for the apparatus 500 as well, noting that further communication devices within the multi-device ecosystem may perform these aspects as well.

For example, the processor 501 may be configured to perform handoff functions compatible with operations and protocols of further communication devices to communicate and transfer tasks seamlessly in a common framework, illustratively via BT and WLAN communication protocols. Furthermore, the processor 501 may store task information in the memory 502 that may indicate tasks being performed by further communication devices and the communication device. The task information may further indicate state or progress of ongoing tasks at the further communication device. The state or progress of an ongoing task may indicate particularly a stage of the task, such as document edits, playback progress in media, a browsing history, etc. which may be used to indicate a beginning of a handed of tasks in a further communication device (i.e. where the user left off).

The processor 501 may be configured to discover and/or recognize further communication devices within the multi-device ecosystem, through various mechanisms, such as pairing, shared accounts, user authentication, etc. to identify and establish connections with further communication devices. Furthermore, the processor 501 may synchronize data in real time or quasi real time to facilitate task handoff. The processor 501 may encode and/or decode messages including task-related information that may include illustratively state or progress of an ongoing task for handoff. Furthermore, the processor 501 may communicate data to input and output devices of the communication device to interact with a user, such as display data, input data, etc. Illustratively, the processor 501 may cause a display device to display notifications and receive user's interaction as a response to displayed notifications. For example, the processor 501 may encode a display image to notify the user that a hand off is recommended to a designated further communication device in accordance with various aspects described herein. The processor 501 may employ mechanisms to notify users and transfer tasks effectively. This might include notifications, pop-ups, or dedicated interfaces allowing users to initiate the handoff process explicitly

In some examples, a task handoff may include an establishment of a session between a device that hands off a task (i.e. handing off device) and a device that is handed off the task (i.e. handed off device). The session may be at an application layer through application integration to enable a user to switch between communication devices seamlessly. The processor 501 may establish such sessions and communicate data at an application layer.

To establish and maintain the multi-device ecosystem, the processor 501 may be configured to facilitate inter-device communications and orchestrate data sharing within the multi-device ecosystem. For this purpose, the processor 501 may perform a device discovery to identify further communication devices within proximity to establish short-range wireless communication network. Illustratively, the processor 501 may control the communication interface 503 to perform scanning to identify advertising further communication devices within the vicinity.

Furthermore, the processor 501 may identify further communication devices based on received advertisement packets or beacons and identify service capabilities of identified further communication devices. The processor 501 may further initiate connection processes with (one, some or all) further communication devices to establish physical and logical connections in accordance with their service capabilities. Once connections are established, the processor 501 may facilitate data exchange between the communication device and the further communication devices. The processor 501 may encode/decode data packets according to designated radio communication protocol (e.g. BT, WLAN) and cause the communication interface to receive and/or transmit radio communication signals.

Furthermore, the processor 501 may control multi-device ecosystem operations performed by the communication device and the further communication devices, such as data synchronization, collaboration, control and interaction among interconnected devices, sharing of external resources, etc. In such operations, at least one of the further communication devices may share resources with the communication device or through established connections of the communication devices. Sharing resources in this context may refer to exchange of data, performing a collaborative task, sharing external resources, sharing of internal resources of the further communication device (e.g. remote processing, storage, etc).

In accordance with various aspects provided herein, the processor 501 may collect information representative of operational resources available for further communication devices within the short-range wireless network, via which devices of the multi-device ecosystem connects to each other. Operational resources may include resources of one or more types, which a device may use to perform tasks and operations associated with the multi-device ecosystem. Illustratively, operational resources may include power supply resources, such as a remaining battery charge of a battery of the device, network communication resources, such as a data traffic bandwidth, a packet error rate, a data throughput, a network capability (i.e. to which networks the device may access, e.g. Wireless Arena Network (WAN), WLAN, etc.), a memory usage, such as a random access memory (RAM) usage, a processing capability, a processor overhead, established connections with other communication etc. The information representative of operational resources available may include a metric (e.g. a value) for one or more resources of the operational resources, which may represent the amount of a corresponding operational resource available.

The processor 501 may collect the information in accordance with any known methods. For example, the processor 501 may encode messages including a request of operational resource information for transmission to further communication devices. In some examples, the encoded message may cause the further communication devices to report their operational resources within designated intervals (e.g. periodically). The processor 501 may decode messages received from the further communication devices to obtain operational resource information of the further communication devices respectively. In some aspects, the processor 501 may further generate information representing available operational resources of the communication device as well.

The processor 501 may store obtained (e.g. received and generated) operational resource information from multiple further communication devices into the memory 502. The processor 501 may aggregate received operational resource information collected from multiple further communication device to obtain an aggregate operational resource information indicating available operational resources of multiple further communication devices. In various aspects, the aggregate operational resource information may also be referred to as operational resource information in this disclosure, unless indicated otherwise. In accordance with various aspects provided herein the processor 501 may cause the memory 502 to store operational resource information in a look up structure.

The communication interface 503 may have established one or more connections with one or more further communication devices within the multi-device ecosystem. In the multi-device ecosystem, the apparatus 500 at one end of the connections and/or the respective further communication devices at the other end of the connections may share its resources. In some examples, two further communication devices having established connections with the apparatus 500 may share their resources between them.

Among a plurality of communication devices including the communication device including the apparatus 500 and the further communication devices, the processor 501 may identify and/or detect a resource drain of operational resources of one of the communication devices. A resource drain may refer to having a resource of which a value measuring the resource is below (or above depending on the resource and the designated threshold) a designated threshold. A resource drain may also refer to a decrease of the value measuring the resource within a designated period of time, in which the amount of decrease is greater than a designated threshold. The processor 501 may detect the resource drain based on the operational resource information.

Illustratively, the memory 502 may store threshold information representative of designated thresholds associated with the detection of a resource drain. The threshold information may include a designated threshold for one or more operational resources. Illustratively, for a remaining battery state, a designated threshold may be 20% of the battery charge, and if a remaining battery state of a communication device is below 20%, the processor 501 may detect a resource drain of power supply resources for the communication device. Furthermore, for a packet error rate, a designated threshold may be 1%, and in a packet error rate of a communication device is above 1%, the processor may detect a resource drain of communication resources for the communication device.

Illustratively, the processor 501 may identify an operational resource of one of the communication devices indicates a resource drain (e.g. the metric is below or above a designated threshold) based on the operational resource information stored in the memory 502. In some examples, a further communication device having a resource drain may encode a message indicative of a resource drain. The message may further include information representative of the type of the respective resource, the metric indicative of available amount of the respective resource, etc. The processor 501 may decode the message to identify the operational resource of that further communication device indicates the resource drain.

The processor 501 may further identify established connections of that communication device, through which that communication device is connected to further communication devices within the multi-device ecosystem. Noting that the resource drain may cause that communication device to not to perform its tasks associated with the multi-device ecosystem properly, or at all, in accordance with various aspects provided herein, it may be desirable to configure the multi-device ecosystem, such that alternatives are provided in case of a source drain.

For this purpose, the processor 501 may determine a first communication device associated with the identified resource drain. Illustratively, the first communication device may be a communication device that is to be affected by a lack of resources associated with a resource drain.

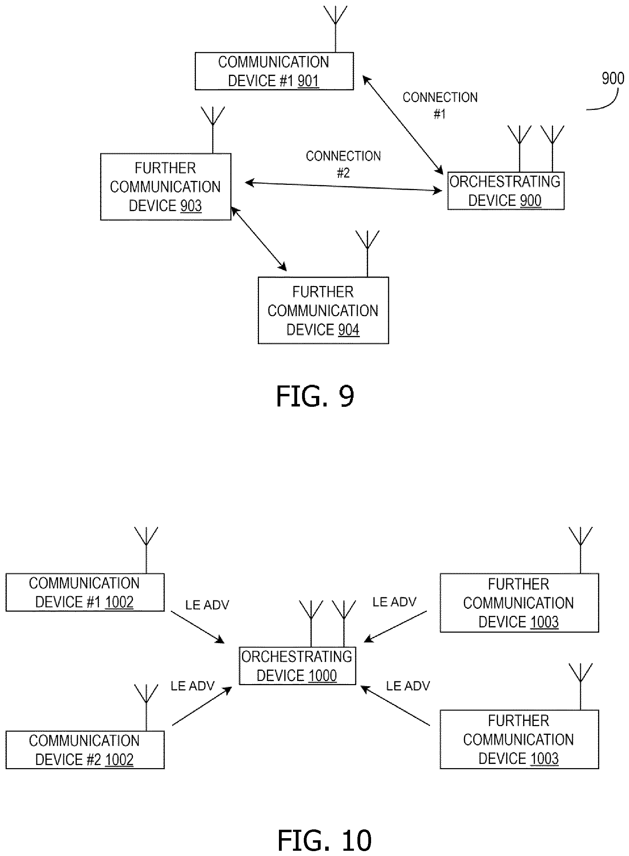

FIG. 9 shows an exemplary illustration of a short-range wireless network for a multi-device ecosystem. Illustratively, the orchestrating device 901 may include the apparatus 500. The orchestrating device 900 may have a first established connection with the first communication device 901. As described above, the network may include a plurality of communication devices, the orchestrating device 900 being the communication device as described in this disclosure, and the first communication device 901, and illustrated further communication devices 903, 904 may be referred to as further communication devices in this disclosure. Illustratively, the further communication device 903 and the further communication device 904 may have an established connection in between for resource sharing. There may be additional communication devices present in the network, which have not been illustrated. The processor 501 of the orchestrating device 900 may have obtained the operational resource information of a plurality of communication devices indicative of available operational resources of the first communication device 901 and the further communication devices 903, 904.

The processor 501 may identify a drain of an operational resource of the first communication device 901 based on the operational resource information stored in the memory 502 obtained by previously received messages from the first communication device 901 and the further communication devices 903, 904. Furthermore, the processor 501 may, based on task information stored in the memory 502, determine one or more ongoing tasks of the first communication device 901.

As indicated, the processor 501 may identify the drain of the operational resource of the first communication device 901 based on a metric associated with the amount of available operational resource and a threshold. In some examples, the processor 501 may identify the resource drain based on a message received from the first communication device, which the message indicates that an amount of an operational resource is below or above a threshold indicating the resource drain.

Further, the processor 501 may determine further communication devices within the network to which the ongoing task can be handed off. The processor 501 may determine such further communication devices based on the task information stored in the memory 502 indicative of task performance capabilities of the further communication devices. Illustratively, the ongoing task may be associated with a particular operation and the processor 501 may determine which further communication devices within the network are capable to perform that particular operation. In some examples, the task information stored in the memory 502 may indicate performed tasks by the further communication devices within the network in the past. The processor 501 may determine such further communication devices accordingly based on tasks previously performed by them.

In various examples, the processor 501 may select a set of further communication devices as handed off device candidates. The handed off device candidates may include one or more further communication devices within the network, which are capable to perform the ongoing task themselves (e.g. which are capable to accommodate the ongoing task from where it has been left off).

Furthermore, the processor 501 may determine a result indicative of whether the ongoing task performed by the first communication device 901 is to be handed off to a second communication device. The processor 501 may determine the result based on the operational resources of the second communication device and/or the operational resources of the first communication device.

For example, the processor 501 may determine to hand off the ongoing task to the second communication device if an operational resource metric, being indicative of an amount of a corresponding operational resource, is below or above a designated threshold which indicates a presence of the resource drain. The processor 501 may obtain the operational resource metric of the corresponding operational resource from the operational resource information stored in the memory 502. Based on a comparison that the processor 501 performs with the designated threshold, the processor 501 may trigger a hand off operation of the ongoing task.

In some examples, the processor 501 may determine to hand off the ongoing task to the second communication device if an operational resource metric of a corresponding operational resource of the second communication device, which corresponds to the operational resource of the first communication device 901 that indicates the resource drain, is above or below the designated threshold used to determine the resource drain. Illustratively, if the processor 501 determines that the operational resource metric of the first communication device 901 is below a designated threshold for a particular operational resource, that is being indicative of the resource drain, the processor 501 selects the second communication device among the further communication devices, which has an operational resource metric that is above the designated threshold for the particular operational resource.

Illustratively, in some examples, the processor 501 may have determined handed off device candidates from the further communication devices, which are capable to perform the ongoing task. The processor 501 may select the second communication device among the handed off device candidates, which has the highest amount of that particular operational resource. Accordingly, the processor 501 may determine the best handed off device candidate as the second communication device in terms of that particular operational resource.

In some examples, the processor 501 may determine the result indicating that the ongoing task is not to be handed over to any further communication devices. In such cases, the processor 501 may send a message to the first communication device 901 to indicate to the user of the first communication device that no further device could be found within the multi-device environment to hand off the ongoing task, which may further indicate the resource drain of the operational resource.

Once the processor 501 determines the second communication device to which the ongoing task is to be handed over, the processor 501 may establish a connection (if no established connection exists) with the second communication device to indicate the hand off determination. Illustratively, the processor 501 may encode a message including a hand off request which may further indicate the type of the ongoing task for a transmission to the second communication device, and decode a response message including whether the second communication device accepts or refuses the hand off.

In some examples, the processor 501 may further determine whether the first radio communication device 901 is to establish a connection with the second communication device to hand off the ongoing task. The processor 501 may identify that there is no established connection between the first communication device 901 and the second communication device based on information indicative of established connections of the first communication device 901 and the second communication device within the operational resource information stored in the memory 502. Accordingly, the processor 501 may encode a message for a transmission to the first communication device and/or the second communication device, which the message indicates that a connection has to be established to hand off the task. The message may further include connection details of the respective communication device with which a connection is to be established.

Accordingly, the first communication device 901 and the second communication device may exchange data over an established connection to perform the hand off operation. Illustratively, the first communication device 901 may send information representing the state of the ongoing task, or a state of the ongoing task from where the second communication device is going to accommodate the ongoing task.

In accordance with various aspects provided herein, the communication interface 503 which the processor 501 uses to perform above-mentioned communications within the multi-device ecosystem may be configured to communicate according to the BLE communication protocol. It is to be noted that BLE support may be available in most of communication devices in the multi-device ecosystem due to its popularity in peer to peer (P2P) connections. BLE may provide optimal preference in industry options for sharing data between devices in an optimized and reliable way, by using LE advertisements. LE advertisements provide short data packets and regular intervals which does not have big impact on transmission power.

Illustratively, in BLE protocol, secondary devices (i.e. further communication devices as peripheral devices) may send advertisement packets that may be directed to all communication devices that can receive the advertisement packets or advertisement packets may be directed to a specific communication device, which may be referred to as a unicast advertisement packet.

In particular, the processor 501 may receive the information representative of available operational resources from further communication devices within the network (i.e. operational resource information) via LE advertisement packets. Each communication device within the network environment may be configured to send LE advertisement packets in designated intervals, illustratively periodically or substantially periodically, to inform the orchestrating device 900 of available operational resources. Through this mechanism, the orchestrating device 900 may not be forced to maintain established connections with all communication devices within the multi-device ecosystem to keep its records updated.

FIG. 10 exemplarily illustrates schematically a multi-device ecosystem including communication devices. The orchestrating device 1001 may receive information representing available operational resources in LE advertisement packets, each provided in a type/length/value (TLV) format within the data of the advertisement packet, as a power supply resource including a remaining battery charge in percentage and a network resource including packet error rate, data throughput, and the network type of a supported network. Illustratively, the operational resource information stored in the memory 502 includes the remaining battery charge in percentage, packet error rate, data throughput, and supported network type, for each communication device 1002, 1003, 1004, 1005.

In an illustrative use case, a user may be using a video streaming service to watch a video. The processor 501 may identify that the remaining battery charge of the first communication device 1002 is below 5%. Accordingly, the processor 501 may select a second communication device 1003 to hand off the task associated with the video streaming service. The processor 501 may encode unicast advertisement packets to indicate the hand off to the first communication device 1002 and the second communication device 1003. Accordingly, the first communication device 1002 may notify the user of the possibility to hand off, and it may hand off the video streaming operation, exemplarily in response to an interaction of the user, to the second communication device 1003.

In another illustrative use case, a user may be using a video streaming service to watch a video. The processor 501 may identify that the network resources indicate a packet error rate above 2% and data throughput is below 1Mbit/sec. Accordingly, the processor 501 may select a second communication device 1003 to hand off the task associated with the video streaming service. The processor 501 may encode unicast advertisement packets to indicate the hand off to the first communication device 1002 and the second communication device 1003. Accordingly, the first communication device 1002 may notify the user of the possibility to hand off, and it may hand off the video streaming operation, exemplarily in response to an interaction of the user, to the second communication device 1003.

In accordance with various aspects provided herein, there seems to be room for improvement in ensuring effective communication during emergencies when individuals might not have their mobile devices charged. This scenario may often result in communication breakdowns precisely when critical information needs dissemination. While emergency alert systems exist, their reliance on mobile devices poses a significant vulnerability.

Such emergencies may include natural disasters, such as earthquakes, hurricanes, floods, wildfires, tsunamis; public safety incidents, such as terrorist attacks, hazardous material spills; health crisis, weather-related alerts, civil emergencies, such as power outages, infrastructure failures; or environmental hazards, such as chemical spills, air quality warnings, etc.

Current emergency alert systems may depend on mobile devices, assuming a constant power supply. However, this assumption falls short during critical situations where power sources might be unavailable or limited. Integrating alternative communication channels such as low-power radio broadcasts, satellite communication, or mesh networks could ensure alert delivery even when mobile devices lack power, broadening the reach of emergency notifications.

In emergencies, a major issue may be communication failure due to devices being unusable or out of battery. This may happen because of things like power shutdowns, long-lasting emergencies, or damage to communication networks. While these problems can't be entirely prevented, in accordance with aspects provided herein, improvements may be made. Various aspects described herein may include the use of emergency alert systems on mobile devices in an effective manner and make device batteries last longer by using that information. This way, even if there is a power cut or network damage, devices can still receive and relay critical alerts, helping communication stay active for longer periods during emergencies.

Aspects in this context are to be described by referring to the apparatus 500 described in accordance with FIG. 5. It is to be noted that, although aspects described in this context may be combined and co-exist with further aspects provided in this disclosure, examples provided herein may also be implemented in a communication device only for the aspects described in this context.

There are various technologies involved in communication device-based emergency alert systems in many regions. In particular, LTE and 5G/NR technology may be involved in, which the communication interface 503 may support. In accordance with designated emergency-alert framework in LTE and 5G/NR, LTE and NR networks may carry emergency alert information in emergency situations to supporting communication devices.

Such frameworks may include cell broadcast (CB), in which designated authorities may use LTE and NR networks to send geographically targeted emergency alerts to all cellular communication devices within a specific area. Through a simultaneous message delivery system, all cellular communication devices within the designated area (e.g. one or more cells) may receive a message indicating an emergency alert.

Such frameworks may further include Public Warning Systems (PWS), in which LTE and NR networks may provide a standardized interfaces for delivering emergency alerts. PWS allows for the integration of emergency alert messages into the network infrastructure, for quick and efficient dissemination of alerts to mobile devices.

Further, such frameworks may include Enhanced Multimedia Broadcast Multicast Service (eMBMS) in which LTE networks can use eMBMS to multicast emergency alerts efficiently by allowing the simultaneous transmission of a multimedia content, including emergency alerts, to multiple users within a cell. Furthermore, LTE and NR networks may use supported geolocation capabilities, to allow emergency alerts to be precisely targeted to specific geographic areas. This feature may ensure that alerts reach only the devices within the affected region.

In accordance with various aspects provided herein, the processor 501 may decode information received from a radio communication interface. Illustratively, a further communication device (e.g. a gNB, an eNB) may have transmitted the information using a framework as described above.

The processor 501 may identify an emergency alert within the decoded information. In some aspects, the processor 501 may identify an emergency alert according to designated message attributes and/or protocols designated for emergency alert. For example, the processor 501 may identify information within a message header of the decoded information. The header may include information representative of a presence of emergency, and the processor 501 may identify the emergency alert based on the information. Illustratively, in a CB, a specific message identifier or a message type field may indicate the emergency alert.

The processor 501 may identify an emergency alert based on information received from designated channels or information received according to designated protocols. Illustratively, such designated channels or protocols may be designated particularly for emergencies. The processor 501 may monitor the designated channels or protocols, and when information received from the designated channels or according to designated protocols, the processor 501 may identify the emergency alert.

In some examples, the processor 501 may identify a particular characteristic from received messages to identify an emergency alert. Illustratively, a received message may include designated keywords and/or codes within the message, which may be indicative of an emergency alert. In some examples, the received messages may include short message service (SMS) messages. In some examples, the received message may include an audio message received via an incoming call. In some examples, the processor 501 may be configured to receive PWS messages, which may indicate the emergency alert. In some examples, received messages may include messages of a software as a service (SaaS) to which the apparatus may have subscribed.

It is to be noted that the processor 501 may identify an emergency alert in any further methods. In some examples, governments and/or regulatory entities may impose certain methods and guidelines for emergency alerts. The processor 501 may be configured to perform actions designated, as indicated, to identify an emergency alert.

In accordance with various aspects described herein, the processor 501 may determine a level of emergency for an identified emergency alert. A level of emergency may refer to a degree of severity, and/or urgency and/or criticality associated with the corresponding emergency indicated by the emergency alert. The level of emergency may indicate potential impact, risks, and/or consequences of the corresponding emergency.

Illustratively, the level of emergency may include predefined emergency levels, such as a low level may indicate an emergency with minimal immediate risk or impact, a moderate level may indicate a risk or a possibility to escalate into a more serious emergency, a high level may indicate a significant risk or immediate threat, and a critical level indicating an extremely serious or life-threatening emergency. In examples, the low level may simply indicate implementation of routine procedures, the moderate level may indicate an implementation of preparedness, the high level may indicate an urgent attention and require specific actions to be taken, and the critical level may indicate a requirement of an immediate action to prevent severe consequences or loss of life.

The processor 501 may determine the level of emergency in various methods. For example, the processor 501 may analyze the emergency alert to determine the level of emergency. In some examples, the received message indicating the emergency alert may include information representative of a type of the emergency or a level of the emergency, which may be provided in the header or payload of the received message. Illustratively a Common Alerting Protocol (CAP), as a standard for emergency alerting, includes information fields designated to specify the emergency level and may also provide the type of the emergency.

In some examples, the processor 501 may determine the level of emergency based on identified keywords within the received message. In an illustrative example, the memory 502 may store mapping information to map identified keywords into corresponding emergency levels. A received SMS message may include a keyword (e.g. "earthquake") which the processor 501 identifies based on stored keywords in the memory and the processor 501 may determine the level of the emergency based on the stored mapping information, illustratively as critical.

In accordance with various aspects provided herein, the processor 501 may implement an interpreter unit configured to interpret received emergency alerts in any form (text, code, audio, video, image, etc.) into a corresponding emergency level. Illustratively, the memory 502 may store classification information, such as certain templates in corresponding forms, and the processor 501 may classify a received emergency alert into an emergency level that provides a match or highest correlation among all stored templates for the corresponding form.

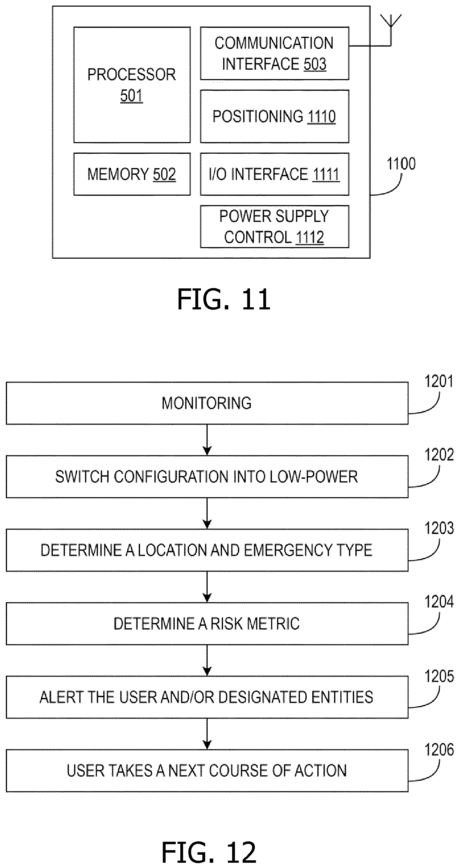

FIG. 11 shows an exemplary schematic illustration of a communication device in accordance with various aspects described herein. The communication device 1100 may include the apparatus 500 as described, such as including the processor 501, the memory 502, and the communication interface 503. Furthermore, the communication device 500 may include a positioning unit 1110, an input/output (I/O) interface 1111 and optionally corresponding I/O devices coupled to the I/O interface 1111, and a power supply control circuitry 1112.

The positioning unit 1110 may include one or more positioning devices which may include components and circuitry for receiving and determining a position based on a Global Navigation Satellite System (GNSS) and/or a Global Positioning System (GPS), and one or more measurement sensors 116, e.g. speedometer, altimeter, gyroscope, velocity sensors, etc. The processor 501 may determine a location (i.e. a position) of the communication device 1100, illustratively based on received signals from a satellite system.

The I/O interface 1111 may receive and send signals to I/O devices which may be included by the communication device 1100 and/or which may be communicatively coupled to the communication device via the I/O interface 1111. The I/O devices may include various components and devices to provide input to the communication device 1100, in particular for the processor 501 to process received input to associate it for various instructions. The I/O devices may include input devices that are designated based on the use case of the communication device 1100.

In some examples, the I/O devices may include a designated button, such as a power button. The provided input may include, in particular, an input associated with an interaction of a user using the respective input device. Exemplarily, a microphone may be one of the I/O devices configured to deliver user input. In some examples, the I/O devices may include a mouse for moving a pointer via hand movements or pressing keys or a keyboard may be one of the I/O devices delivering user interactions by receiving keystrokes, or a touchpad may be one of the I/O devices delivering user interactions by receiving touch inputs, etc.

The I/O devices may be configured to provide an output based on instructions executed by the processor 501. The I/O devices may include output devices that are designated depending on the use case of the communication device 1100. The provided output may include, in particular, an output to present various types of information or indications for a user. For example, a display may be one of the I/O devices configured to display visual information to the user in form of images, text, pictures, videos, etc.

It should be noted that an I/O device may be both an input device and an output device for the communication device 1100 within this context. For example, one of the input/output devices may include a display configured to provide a visual output to a user. Furthermore, the display may include a touch screen display that is configured to receive input from the user interacting with the display. The contact interaction from the user may be detected by a touch input unit. The touch input unit may be configured to detect the interaction of the user with the display via a contact of the user. The touch input unit may be configured to detect contact and/or movement of the user (e.g. via a finger, via a stylus, etc.,) while touching the display. Alternatively, the touch input unit may be configured to detect the interaction of the user via another defined surface. For example, the touch input may include a touchpad that is configured to receive input from the user. Accordingly, such a display may be both an example of an input device and an output device.

Illustratively, input devices of the I/O devices and the processor 501 may communicate with each other via the I/O interface 1111. Input device may send control information representative of the interaction of the user with the input device (e.g. pressing keys, touch inputs, etc.). Based on the received control information, the processor 501 may perform various operations, such as execute instructions, through which the processor 501 may control various aspects of software programs executed by the processor of the computing device, its user interface, further devices that are coupled with the communication device 1100, etc. Furthermore, the communication device 1100 may provide various types of outputs associated with its operation, including visual output, tactile output, audial output, sensory output, data output, etc. Illustratively, the processor 501 may send control information representative of a content to be output by output devices. Output devices may convert received control information into corresponding outputs.

The power supply control circuitry 1112 may be configured to control power supply to various components and units of the communication device 1100. Illustratively, the power supply control circuitry 1112 may supply designated voltages to the processor 501, the memory 502, the communication interface 503, the positioning unit 1110, the I/O interface 1111, and/or any other electrical components or units requiring a supply voltage within the communication device 1110 respectively.

The communication device 1100 may operate in accordance with a plurality of configurations, which may be predefined or predetermined. In accordance with various aspects described above, the plurality of configurations may be designated or associated with possible emergency levels associated with identified emergency alerts. Illustratively, each configuration may be designed in accordance with an emergency level and/or type. Through a determination of an emergency level, the processor 501 may cause the communication device 1100 to operate with a configuration corresponding to the emergency level.

For example, one of the configurations may be a normal configuration in which the communication device 1100 performs its operations independent from any emergency situation and/or emergency alert.

Another configuration may be a low-power configuration. When the communication device 1100 operates in the low-power configuration, the communication device 1100 consumes less power than it consumes in the normal configuration. In the low-power configuration, one or more components and/or units of the communication device 1100 may operate in their respective low-power configurations. Illustratively, the processor 501 may operate with a lower supply voltage and/or at a lower clock frequency compared to the normal configuration. In the low-power configuration, one or more components and/or units of the communication device 1100 may operate with a lower duty cycle. For example, the communication interface 503 may perform communication operations with a lower duty cycle than the normal configuration. In the low-power configuration, one or more components and/or units of the communication device 1100 may be turned off. For example, some I/O devices connected to the I/O interface may be turned off.

In accordance with various aspects provided herein, the processor 501 may provide control signals to corresponding one or more components and/or units to cause them to operate in their respective low-power configuration. In some examples, the processor 501 may further provide a control signal to the power supply control circuit 1112 to reduce respective supply voltages provided to one or more components and/or units of the communication device 1100.

In accordance with various aspects provided herein, the processor 501 may, in response to an identification of the emergency alert, cause the communication device 1100 to operate in the low-power configuration. Accordingly, through a selection of the low-power configuration from available configurations, the processor 501 may cause an increase of the longevity of the power supply of the communication device 1100, noting that the communication device 1100 may include a battery configured to supply power to at least some of the components and/or units of the communication device 1100. In some examples, the processor 501 may immediately switch the configuration of the communication device 1100 into the low-power configuration in response to an identified emergency alert. The processor 501 may than perform finer calculations, which may be based on other parameters associated with the operation, to switch from the low-power configuration into a further configuration of the plurality of configurations, some of which are described herein.

In particular, considering the case that the communication device 1100 is a battery powered device, the processor 501 may determine a remaining battery level of the communication device 1100. In some cases, the processor 501 may cause the communication device 1100 to operate in the low-power configuration if the remaining battery level is below a designated level (e.g. 20% in percentage). In case the remaining battery level is above a designated threshold, the processor 501 may cause the communication device 1100 to operate in the normal configuration or in another configuration.

In some examples, the processor 501 may generate an output device control information to notify the user of the communication device 1100 through an I/O device. The processor 501 may encode the control information to be sent via the I/O interface 1111 to the corresponding I/O device. The control information may cause the I/O device to notify the user of the received emergency alert. Furthermore, the control information may cause the I/O device to present options to select a configuration from the plurality of configurations. Furthermore, the control information may cause the I/O device to recommend an action to the user in accordance with the received emergency alert (e.g. to indicate to charge the communication device, to keep the communication device 1100 operational, to run away or to run to a designated target, etc.).

In accordance with various aspects provided herein, the processor 501 may calculate a risk metric based on at least one of the emergency level, the emergency type, and/or the location of the communication device 1100. The memory may include information representative of recommended actions based on possible calculated risk metrics and at least one of possible emergency levels, possible emergency types, and/or possible locations of the communication device 1100. The processor 501 may recommend the action to the user based on this information stored in the memory and the calculated risk metric and at least one of the emergency level, the emergency type, and/or the location of the communication device 1100.

One of the configurations (which may also be the low-power configuration) may include a configuration in which the positioning unit 1110 is activated. Accordingly, if that configuration is selected, the processor 501 may cause the positioning unit to become operational. The processor 501 may activate the operation of the positioning unit 1100 if necessary.

In one of the configurations (which may also be the low-power configuration, or another configuration), the processor 501 may activate the communication interface 503 if necessary. In some examples, the processor 501 may determine a duty cycle of communication operations that the communication interface 503 performs based on the remaining battery level and/or the emergency level and/or the emergency type.

In accordance with various aspects provided herein, the memory 502 may store configuration information representative of a set of configurations for components and/or units of the communication device for each available emergency level and/or emergency type. Illustratively, in a critical emergency level with an emergency type of an earthquake, the processor 501 may select a configuration in which the positioning unit 1110 is operational and the communication interface 503 operates with a lower duty cycle. On the other hand in a high emergency level with an emergency type of a bomb threat, the processor 501 may select a configuration in which the positioning unit 1110 and the communication interface 503 are turned off.

In accordance with various aspects provided herein, the processor 501 may cause the communication interface 503 to send notifying information to predefined entities (e.g. other users, contacts stored in the memory 502, etc.) indicative of the presence of the emergency. In some examples, the notifying information may further include the location of the communication device 1100. In some examples, the notifying information may further include a recoded audio or video by the I/O devices.

FIG. 12 shows an exemplary illustration of a flow diagram in case of a received emergency alert. In 1201, the processor 501 may implement necessary monitoring to identify a received emergency alert. In 1202, the processor 501 may switch the configuration of the communication device 1100 into a low-power configuration. In 1203, the processor 501 may determine a location of the communication device 1100 and the type of the emergency. In 1204, the processor 501 may determine a risk metric indicative of a predicted impact of the emergency to the user based on the determined location and the type of the emergency. In 1205, the processor 501 may cause I/O devices to alert the user and/or cause the communication interface 503 to send notifying information to designated entities. Illustratively, the processor 501 may determine a type of the alert based on the emergency level and/or the type of the emergency. The type of alert may include a first type in which the user has been notified via the communication device 1100 or external devices, and a second type in which the user has been notified through wearable devices. Accordingly, in 1206, the user may take the next course of action to be in a safe zone.

In further aspects, the communication device may connect to a high-speed network via local Wi-Fi or other wireless methods including cellular communication, at which there may be a room for improvement of utilization of communication resources at network's full bandwidth capacity. In shared network environments, users of the communication devices may encounter instances where they require additional capacity for an enhanced user experience. This variability in data throughput demand may indicate a dynamic need for bandwidth. While the bandwidth exists within the network in consideration of available communication resources throughout the entire bandwidth, such available communication resources might not be allocated to devices requiring higher bandwidth.

In accordance with various aspects described herein, a communication device may implement various aspects to assess real-time communication resource needs and allocate resources according to these assessments. Efficiently optimizing the total available network bandwidth at any given time may necessitate intelligent prediction and proactive adjustment of the device's bandwidth requirements. Through various aspects described herein a more proactive demand for higher bandwidth from the network may be desirable to ensure optimal utilization of the total available network bandwidth.

Through various aspects described herein, a communication device may obtain an efficient utilization of the network (e.g. Wi-Fi/Cellular) bandwidth when connected to a network, which may result in an improvement of the user experience. Furthermore, various aspects may contribute to saving system resources, illustratively when the communication device uses lower bandwidth, transmission power of its antennas may be reduced as the hardware resource utilization is expected to reduce. Accordingly, the communication device may obtain a better specific absorption rate (SAR) performance.

Furthermore, if the communication device identifies a need for a higher bandwidth, it may request from the network, to have priority for data streaming with a higher bandwidth and accordingly the transmit buffers of the communication device may fill faster. This may result in operation in low power configurations or switching to a lower operating frequency. In some aspects, the battery life of the communication device may also improve, and the communication device may align itself to improve user experience in bandwidth constrained environments.

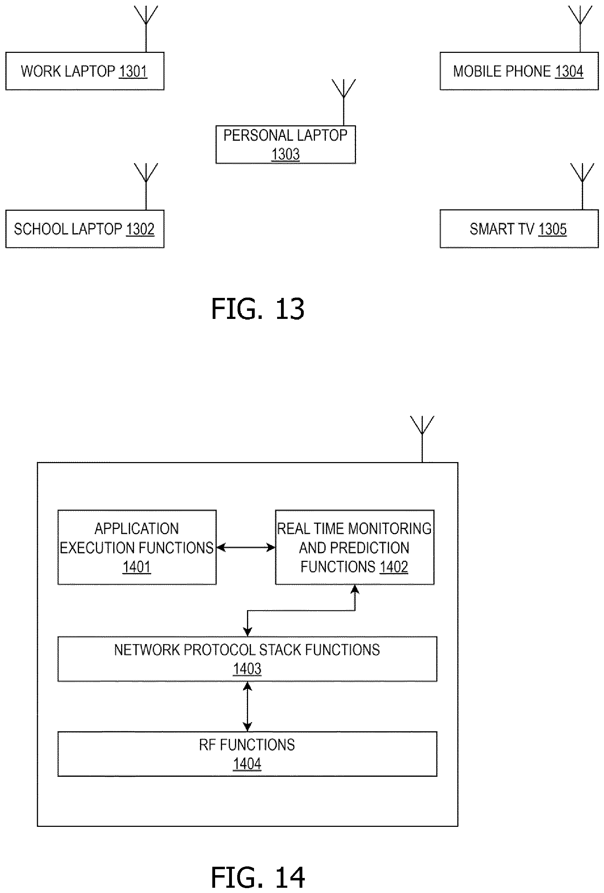

FIG. 13 illustrates schematically an example of a network environment including multiple communication devices sharing the same radio communication resources. Multiple communication devices may illustratively include a wor006B laptop 1301, a school laptop 1302, a personal laptop 1303, a mobile phone 1304, and a Smart TV 1305 connected to a Wi-Fi network which can provide a bandwidth of 300Mbps. When all communication devices are connected to the network, it may not be necessary that all of the communication devices illustrated herein have equal bandwidth requirements at all the time. However, when all these devices are actively used the experience for each user varies based on the kind of application they use at the corresponding communication device.

For instance, the Smart TV 1305 may need more bandwidth, when compared to personal laptop 1303 when a web-browser is used to browse few pages/accessing a digital library. Similarly, when connected to a work laptop 1301 the bandwidth requirements may vary based on the kind of application that is running on the work laptop 1301. For example, if the work laptop 1301 is used for development purpose where the user is working on a software tool which is locally installed in the communication device, the requirements of the communication device in terms of radio communication may be minimal at that point of time. But if the user must attend a virtual meeting the bandwidth demand D1 of the work laptop 1301 may increase.

Similarly, the usage pattern of school laptop 1302 may be completely different from the work laptop 1301 as it may have fixed number of people in a continuous call with proper timing intervals, forming a predictable usage pattern. Similarly, the usage pattern of the Smart TV 1305 may vary based on the user's needs. For instance, during office hours, the Smart TV 1305 can work on a reduced bandwidth prioritizing the significance of the usage of the work laptop 1301 in a bandwidth constrained environment.

To summarize, each communication device may not always be in need of constant bandwidth depending on user's choices and the demand for bandwidth changes may be based on the usage, situation, scenarios, purpose etc. Further, the usage may also vary based on the type of the user, illustratively children may have different bandwidth requirements when compared to adults. If the same user uses different devices, the nature and purpose of the usage may be completely different. Furthermore, some users may be able to compromise or temporarily work on a reduced bandwidth if the other user in a network needs higher bandwidth.

In accordance with various aspects provided herein, processor of communication devices may predict their bandwidth requirements, and a network access node controlling the radio communication resources of the radio communication network may perform operations in accordance with predicted bandwidth requirements to dynamically increase or decrease allocated radio communication resources to the communication devices.

Aspects in this context are to be described by referring to the apparatus 500 described in accordance with FIG. 5 and/or FIG. 12. It is to be noted that, although aspects described in this context may be combined and co-exist with further aspects provided in this disclosure, examples provided herein may also be implemented in a communication device only for the aspects described in this context.

In a radio communication network including multiple connected communication devices, all communication devices within the network may not need equal bandwidth at any given point of time. In accordance with various aspects provided herein, the communication device 1100 may understand the behavior of the communication device usage according to its usage pattern, considering various factors like the active applications, nature of the usage, purpose etc. In some examples, the processor 501 may implement an application layer software, which may predict nature of the usage of the communication device 1100. In some examples, the processor 501 may calculate the bandwidth needs for a future period of time (e.g. next 2-10 seconds).

Considering likely examples of applying these aspects in accordance with radio communication according to a designated network protocol stack (e.g. WLAN protocol stack, LTE or 5G/NR protocol stack or any further cellular protocol stacks), in some aspects, the processor 501 may monitor operations of one or more running application layer software, in particular operations causing the application layer software to communicate application layer data into/from a further layer of the network protocol stack for transmissions and receptions using the network protocol.

An application layer software may be referred to a software provided at the topmost layer in the OSI (Open Systems Interconnection) model or in any network protocol stack modelled according to the OSI model, which is configured to enable communication and interaction between a user and the network to which the communication device 1100 is connected to. The application layer software may include various programs, interfaces, and protocols designated to perform specific tasks or provide services to users. Illustratively, examples of application layer software may include web browsers, email clients, file transfer protocols (FTP), and video conferencing applications. For brevity, the term "application" may be used as the application layer software throughout this disclosure.

In various examples, the processor 501 may execute one or more applications and the processor 501 may perform monitoring operations of the executed one or more applications. In some examples, another processor may execute one or more applications within the communication device 1100 with which the processor 501 may communicate, at least for the purpose of monitoring operations.

The processor 501 may monitor the one or more applications via various methods to obtain one or more application-specific parameters for each of the one or more applications. For example, the processor 501 may monitor resource usage metrics, such as processor utilization, memory consumption, disk I/O, and network bandwidth being allocated to each running application as application-specific parameters. In various examples, an operating system of the communication device 1100 may provide task managers and/or process monitoring tools, through which the processor 501 may obtain a list of running applications and their respective resource utilization as application-specific parameters.

Furthermore, the processor 501 may monitor the one or more applications by implementing performance counters and/or application programming interfaces (APIs), which the operating system may provide. Illustratively, the processor 501 may obtain information representative of response time of the application, latency of the application, data rates, etc. as application-specific parameters. In some examples, the application may be configured to cause the processor 501 (or another processor executing the application) to generate logs or events which the processor may access. Illustratively, the processor 501 may obtain information representative of behavior of the application, errors, and designated performance metrics as application-specific parameters. In some examples, the processor 501 may monitor network packets associated with data traffic of the one or more applications at a further layer of the network protocol stack, to obtain information representative of data traffic, protocol usage, application specific information exchanged over the network as application-specific parameters.

In some examples, the memory 502 may store application-specific information associated with various static or dynamic features of the one or more applications. For example, the application-specific information in this context may include a type or a category designated to each running application, a user identifier that uses each running application (e.g. logon data), a bandwidth requirement for each running application, etc. In some examples, the type or the category designated for an application may include a live streaming application, a virtual meeting application, a work and/or school application, a web browser application, a social media application, a file streaming application, an over the top (OTT) application. In some examples, the application-specific parameters as described above may also include the application-specific information.

Through the nature of application-specific parameters being real-time or quasi real-time, the processor 501 may predict a network usage pattern for the communication device based on the application-specific parameters obtained with the monitoring. Noting that it is likely that the behaviors of the users change based on time of the day, the processor 501 may predict the network usage pattern based on the application-specific parameters and time information representing the time of the day.

In accordance with various aspects provided herein, the processor 501 may predict the network usage pattern based on any one or any combination of application-specific parameters as described above. For example, the processor 501 may predict the network usage pattern based on past bandwidth requirements of the one or more running applications, a type or a category of the one or more running applications, a current user using the one or more running applications and the time information.

The processor 501 may predict the network usage pattern according to any prediction model given the application-specific parameters used. In some examples, the prediction model may include a rule-based model. In some examples, the processor 501 may predict the network usage pattern using a trained artificial intelligence or machine learning model (AI/ML).

FIG. 14 shows schematically an exemplary illustration of a deployment of monitoring functions of the communication device 1100. As illustrated herein, processor functions may include application execution functions 1401 and real time monitoring and prediction functions 1402, which may communicate with each other to collect application-specific parameters. The real time monitoring and prediction functions 1402 may further communicate with the network protocol stack functions 1403 to encode and decode data according to the designated communication protocol. The network protocol stack functions 1403 may further communicate with RF functions 1404 to transmit and/or receive radio communication signals. Illustratively, the application execution functions 1401 may include executed applications of different types, such as OTT applications, user streaming applications, social medium applications, web browser applications, audio streaming applications, work/school applications.

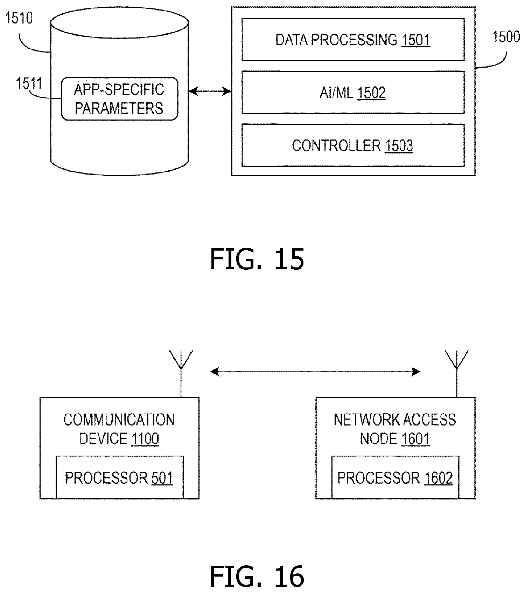

FIG. 15 shows schematically an example of a processor and a memory to implement an AI/ML. The processor 1500 is depicted to include various functional units that are configured to provide various functions as disclosed herein, associated with the processor 501. The skilled person would recognize that the depicted functional units are provided to explain various operations that the processor 1500 may be configured to perform. Similarly, the memory 1510 (e.g. the memory 502) is depicted to include the application-specific parameters 1511 as a block, however, the memory 1510 may store the application-specific parameters 1511 in any kind of suitable configuration or mechanism.

Furthermore, the AI/ML unit 1502 is depicted as it is implemented in the processor 1500 only as an example, and any type of AI/ML implementation which may include the implementation of the AI/ML in an external processor, such as an accelerator, a graphics processing unit (GPU), a neuromorphic chip, or in a cloud computing device, or in an external processing device may also be possible according to any methods.

The processor 1500 may include a data processing unit 1501 that is configured to process data and obtain input data for the AI/ML unit based on the application-specific parameters 1511 as provided in various examples in this disclosure to be stored in the memory 1510. In various examples, the application-specific parameters 1511 may include not only current but also past information for at least within a period of time in a plurality of instances of time (e.g. as a time-series data).

The data processing unit 1501 may implement various preprocessing operations to obtain the application-specific parameters 1511. Such operations may include cleaning the telemetry data by removing outliers, handling of missing parameters, correcting errors or inconsistencies, and such. Operations may further include data normalizations in order to scale the application-specific parameters 1511 to a common range. Operations may further include data transformation including mapping the application-specific parameters 1511 based on predefined mapping operations corresponding to mathematical functions to map one or more data items of the application-specific parameters 1511 to a mapped data time for the purpose of analysis.

The data processing unit 1501 may be configured to generate training dataset based on the application-specific parameters 1511. In other words, based output of the AI/ML unit 1502 in response to the input data, the data processing unit 1501 may prepare the training data to be used in the training of the AI/ML The data processing unit 1501 may be configured to apply data fusion techniques to aggregate data. Data fusion may be considered as a process of integrating and combining data, within this context, by combining the application-specific parameters 1511 to obtain a unified dataset.

The data processing unit 1501 may further implement feature extraction operations. It is to be considered that the AI/ML implemented by the AI/ML unit may have certain constraints, some of which may relate to the structure and aspects of the data to be inputted to the AI/ML. The feature extraction operations may include translating (i.e. transforming) the application-specific parameters 1511 into input data of the AI/ML. The feature extraction operations may further include generation of training input data for the training dataset based on the application-specific parameters 1511. In some aspects, the feature extraction operations may be based on model information representing the attributes to be used as the input of the AI/ML, relative importance or weights of the attributes, etc. The feature extraction operations may include reducing the number of attributes (i.e. data items from the application-specific parameters 1511) to be used, ranking of the attributes, etc. based on the model information.

In some aspects, the application-specific parameters 1511 may include information representative of annotations and/or labels to be used for training. In some aspects, the data processing unit 1501 may also assign labels or assign ground truth values for the generated training data for the generation of the training dataset. In some aspects, the data processing unit 1501 may further generate annotations for the generation of the training data set. Generation of annotations and/or labels may be according to supervised training inputs, or may be based on unsupervised methods, exemplarily by an implementation of an automatized model to assign the labels and/or the annotations.

For supervised learning, generation of labels and annotations may require domain expertise and an understanding of the specific tasks that the AI/ML is designed to address. For example, a human expert might need to review network logs and performance data to identify contributions to communication resource efficiency, which could then be labeled as positive or negative examples for a congestion prediction model. In some cases, semi-supervised or unsupervised learning techniques can be used to reduce the reliance on labeled data. These approaches may involve clustering, anomaly detection, or other methods that can identify patterns and relationships in the data without explicit ground truth labels.

Accordingly, the data processing unit 1501 may generate the training dataset based on the application-specific parameters 1511. It is to be noted that the AI/ML unit 1502 may use the training dataset in predefined portions, namely a first portion of the training data set for training, a second portion of the training dataset for validation and a third portion of the training dataset for testing purposes. The AI/ML unit 1502 may use the first portion to train the AI/ML, which may allow the AI/ML to learn the underlying patterns and relationships in the data. The AI/ML unit 1502 may use the second portion to evaluate and fine-tune the AI/ML during the training process, which may help to prevent overfitting and improve generalization. Finally, the AI/ML unit 1502 may use the third portion to assess the performance of the trained AI/ML and provide an unbiased estimate of their accuracy and effectiveness for AI/ML tasks.

The AI/ML unit 1502 may implement one or more AI/MLs. The aspects are provided for one AI/ML but it may also include applications involving more than one AI/MLs. The AI/ML may be configured to receive input data with certain constraints, features, and formats. Accordingly, the data processing unit 1501 may obtain input data, that is based on the application-specific parameters 1511, to be provided to the AI/ML to obtain an output of the AI/ML. In various examples, the data processing unit 1501 may provide input data including the application-specific parameters 1511 to the AI/ML. The input data may include attributes of the application-specific parameters 1511 associated with a period of time or a plurality of consecutive periods of time. In various examples, the data processing unit 1501 may convert the application-specific parameters 1511 to an input format suitable for the AI/ML (i.e. feature extraction e.g. to input feature vectors) so that the AI/ML may process the application-specific parameters 1511.

The processor 1500 may further include a controller 1503 to control the AI/ML unit 1502. The controller 1503 may provide the input data to the AI/ML, or provide the AI/ML unit 1502 instructions to obtain the output. The controller 1503 may further be configured to perform further operations of the processor 1500 in accordance with various aspects of this disclosure.

The AI/ML may be any type of machine learning model configured to receive the input data and provide an output as provided in this disclosure. The AI/ML may stand for the ML-based application provided in the disclosure. The AI/ML may include any type of machine learning model suitable for the purpose. The AI/ML may include a decision tree model or a rule-based model suitable for various aspects provided herein. The AI/ML may include a neural network. The neural network may be any type of artificial neural network. The neural network may include any number of layers, including an input layer to receive the input data, an output layer to provide the output data. A number of layers may be provided between the input layer and the output layer (e.g. hidden layers). The training of the neural network (e.g., adapting the layers of the neural network, adjusting Model parameters) may use or may be based on any kind of training principle, such as backpropagation (e.g., using the backpropagation algorithm).

For example, the neural network may be a feed-forward neural network in which the information is transferred from lower layers of the neural network close to the input to higher layers of the neural network close to the output. Each layer may include neurons that receive input from a previous layer and provide an output to a next layer based on certain AI/ML (e.g. weights) parameters adjusting the input information.

The AI/ML may include a recurrent neural network in which neurons transfer the information in a configuration in which the neurons may transfer the input information to a neuron of the same layer. Recurrent neural networks (RNNs) may help to identify patterns between a plurality of input sequences, and accordingly, RNNs may be used to identify, in particular, a temporal pattern provided with time-series data and perform estimations based on the identified temporal patterns. In various examples of RNNs, long short-term memory (LSTM) architecture may be implemented. The LSTM networks may be helpful to perform classifications, processing, and estimations using time series data.

An LSTM network may include a network of LSTM cells that may process the attributes provided for an instance of time as input data, such as attributes provided for the instance of time, and one or more previous outputs of the LSTM that have taken in place in previous instances of time, and accordingly, obtain the output data. The number of the one or more previous inputs may be defined by a window size, and the weights associated with each previous input may be configured separately. The window size may be arranged according to the processing, memory, and time constraints and the input data. The LSTM network may process the features of the received raw data and determine a label for an attribute for each instance of time according to the features. The output data may include or represent a label associated with the input data.

In various examples, the neural network may be configured in top-down configuration in which a neuron of a layer provides output to a neuron of a lower layer, which may help to discriminate certain features of an input.

In accordance with various aspects, the AI/ML may include a reinforcement learning model. The reinforcement learning model may be modeled as a Markov decision process (MDP). The MDP may determine an action from an action set based on a previous observation which may be referred to as a state. In a next state, the MDP may determine a reward based on the current state that may be based on current observations and the previous observations associated with previous state. The determined action may influence the probability of the MDP to move into the next state. Accordingly, the MDP may obtain a function that maps the current state to an action to be determined with the purpose of maximizing the rewards. Accordingly, input data for a reinforcement learning model may include information representing a state, and an output data may include information representing an action.

Reinforcement learning (RL) is a type of machine learning that focuses on training an agent to make decisions by interacting with an environment. The agent learns to perform actions to achieve a goal by receiving feedback in the form of rewards or penalties. As a machine learning model, reinforcement learning models learn from data (in this case, the agent's experiences and interactions with the environment) to adapt their behavior and improve their performance over time. Since machine learning is a subset of AI, reinforcement learning models are also considered AI models, as they aim to perform tasks that require human-like decision-making capabilities.

The AI/ML may include a convolutional neural network (CNN), which is an example for feed-forward neural networks that may be used for the purpose of this disclosure, in which one or more of the hidden layers of the neural network include one or more convolutional layers that perform convolutions for their received input from a lower layer. The CNNs may be helpful for pattern recognition and classification operations. The CNN may further include pooling layers, fully connected layers, and normalization layers.

The AI/ML may include a generative neural network. The generative neural network may process input data in order to generate new sets, hence the output data may include new sets of data according to the purpose of the AI/ML. In various examples, the AI/ML may include a generative adversarial network (GAN) model in which a discrimination function is included with the generation function, and while the generation function may generate the data according to model parameters of the generation function and the input data, the discrimination function may distinguish the data generated by the generation function in terms of data distribution according to model parameters of the discrimination function. In accordance with various aspects of this disclosure, a GAN may include a deconvolutional neural network for the generation function and a CNN for the discrimination function. The AI/ML may include a trained AI/ML that is configured to provide the output as provided in various examples in this disclosure based on the input data and one or more Model parameters obtained by the training. The trained AI/ML may be obtained via an online and/or offline training. A training agent may perform various operations with respect to the training at various aspects, including online training, offline training, and optimizations based on the inference results. The AI/ML may take any suitable form or utilize any suitable technique for training process. For example, the AI/ML may be trained using supervised learning, semi-supervised learning, unsupervised learning, or reinforcement learning techniques.

In supervised learning, the AI/ML may be obtained using a training dataset including both inputs and corresponding desired outputs (illustratively, input data may be associated with a desired or expected output for that input data). Each training instance may include one or more input data item and a desired output. The training agent may train the AI/ML based on iterations through training instances and using an objective function to teach the AI/ML to estimate the output for new inputs (illustratively, for inputs not included in the training set). In semi-supervised learning, a portion of the inputs in the training set may be missing the respective desired outputs (e.g., one or more inputs may not be associated with any desired or expected output).

In unsupervised learning, the model may be built from a training dataset including only inputs and no desired outputs. The unsupervised model may be used to find structure in the data (e.g., grouping or clustering of data points), illustratively, by discovering patterns in the data. Techniques that may be implemented in an unsupervised learning model may include, e.g., self-organizing maps, nearest-neighbor mapping, k-means clustering, and singular value decomposition.

Reinforcement learning models may include positive feedback (also referred to as reward) or negative feedback to improve accuracy. A reinforcement learning model may attempt to maximize one or more objectives/rewards. Techniques that may be implemented in a reinforcement learning model may include, e.g., Q-learning, temporal difference (TD), and deep adversarial networks.

The training agent may adjust the Model parameters of the respective model based on outputs and inputs (i.e. output data and input data). The training agent may train the AI/ML according to the desired outcome. The training agent may provide the training data to the AI/ML to train the AI/ML. In various examples, the processor and/or the AI/ML unit itself may include the training agent, or another entity that may be communicatively coupled to the processor may include the training agent and provide the training data to the device, so that the processor may train the AI/ML.

In various examples, the device may include the AI/ML in a configuration that it is already trained (e.g. the Model parameters in a memory are already set for the purpose). It may be desirable for the AI/ML itself to have the training agent, or a portion of the training agent, in order to perform optimizations according to the output of inferences as provided in this disclosure. The AI/ML may include an execution unit and a training unit that may implement the training agent as provided in this disclosure for other examples. In accordance with various examples, the training agent may train the AI/ML based on a simulated environment that is controlled by the training agent according to similar considerations and constraints of the deployment environment.

The skilled person would immediately recognize that the exemplary AI/ML disclosed herein is explained that may have many configurations. In a least complex scenario, for execution of the AI/ML (i.e. inference), the AI/ML may be configured to provide an output including a predicted network usage pattern of the communication device 1100. For training of the AI/ML, the training agent may train the AI/ML by providing training input data of the generated training dataset to the input of the AI/ML and it may adjust model parameters of the AI/ML based on the output of the AI/ML that is mapped according to the training input data, and training output data of the training dataset (e.g. labels, annotations) associated with the provided training input data with an intention to make the output of the AI/ML more accurate. Accordingly, the training agent may adjust one or more model parameters based on a calculation including parameters for the output of the AI/ML for the training input data and the training output data associated with the training input data. In various examples, the calculation may also include one or more parameters of the AI/ML. With each iteration with respect to the training input data that may include many data items, which each data item may represent an input of an instance (of time, of observation, etc.) on various aspects and each iteration may iterate a respective data item representing an input of an instance, the training agent may accordingly cause the AI/ML to provide more accurate output through adjustments made in the model parameters.

The processor 1500 may implement the training agent, or another entity that may be communicatively coupled to the processor 1500 may include the training agent and provide the training input data to the device, so that the processor 1500 may train the AI/ML. The training agent may be part of the AI/ML unit 1502 described herein. Furthermore, the controller 1503 may control the AI/ML unit 1502 according to a predefined event. For example, the controller 1503 may provide instructions to the AI/ML unit 1502 to perform the inference and/or training in response to a received request from another entity. The controller 1503 may further obtain output of the AI/ML from the AI/ML unit 1502.

FIG. 16 shows an exemplary illustration of a communication with respect to a predicted network usage pattern. The communication is between the communication device 1100 and a network access node 1601. It is to be noted that the network access node 1601 may serve a plurality of communication devices including the communication device 1100. For illustrative purposes, the network access node 1601 may also include an apparatus equivalent to the apparatus described in accordance with FIG. 5, including a processor 1602. Once the processor 501 obtains the predicted network usage pattern, the processor 501 may encode the predicted network usage pattern of the communication device 1100, as network usage information, to the network access node 1601. The processor 1602 may decode the network usage information.

The processor 501 may illustratively encode the network usage information, such that it may include a type or a category of the one or more running applications, a field that may indicate an increase or a decrease of allocated communication resources, a required bandwidth information based on the predicted network usage pattern, and a duration estimate for the allocation. For example, the network usage information may include an indication of a lock request for the required and/or negotiated bandwidth, so that the network access node 1601 may not consider throttling the bandwidth of the communication device 1100 to accommodate a communication resource increase request of another communication device.

Based on the network usage information indicating the predicted network usage pattern of the communication device 1100, the processor 1602 may allocate radio communication resources to at least the communication device 1100. Illustratively, the processor 1602 may increase and/or decrease previously allocated communication resources to the communication device 1100. It is to be noted that in congested networks, there may not be available communication resources, hence the processor 1602 may further allocate (e.g. re-allocate previously allocated) communication resources for at least one other communication device of the plurality of communication device based on the network usage information. In some examples, the processor 1602 may allocate communication resources for the plurality of communication resources.

In some examples, the processor 1602 may allocate communication resources to each communication device based on at least one of a current user or a type of respective communication device, time information and/or a type of the one or more running applications associated with the network usage information provided by the respective communication device. Illustratively, the network usage information encoded by the processor 501 may include this information.

From the perspective of the communication device 1100, the processor 1602 may allocate the communication resources based on previously one or more received network usage information received from the communication device 1100. In some examples, the processor 1602 may allocate or re-allocate the communication resources to the communication device if the network usage information indicates an increase at the predicted network usage pattern compared to a previously received predicted network usage pattern of the communication device 1100. In some examples, the processor 1602 may determine a first set of radio communication resources to be reallocated based on the network usage information received from the communication device 1100, while the processor 1602 may determine a second set of radio communication resources to allocate to the communication device 1100, which the second set is independent from the network usage information.

Accordingly, the processor 1602 may encode scheduling information indicating allocated communication resources of the communication device 1100 for a transmission to the communication device 1100. The processor 501 may decode the scheduling information and configure the communication interface 503 to communicate in accordance with the allocated resources.

In some examples, the scheduling information may indicate a period of time which the communication device 1100 may cause the communication interface 503 to operate in a low power configuration. Illustratively, the scheduling information may indicate a discontinuous transmission (DRX) scheme.

Through aspects described herein, in a scenario in which illustrative devices in accordance with FIG. 13 are served by the network access node 1601, through implementation of aspects described above, such cases below may be described.

In one example, the communication resource demand of the work laptop 1301 may be at its peak during office hours, while the same user using the personal laptop 1303 may require less or no communication resources. Accordingly, the network access node 1601 may allocate more communication resources to the work laptop 1301 (i.e. more than designated, more than the personal laptop 1303), and may allocate no or less communication resources to the personal laptop 1303.

In one example, a user may start reading a digital newsprint on the personal laptop 1303, and then switch to watching live news based on topics of interest. The respective processor of the personal laptop 1303 (e.g. the processor 501) may predict this behaviour and estimate a required bandwidth based on the prediction and request allocation of more communication resources to increase the user experience when the user switches to the streaming app from the digital newsprint.

In one example, when a user uses to work laptop 1301 with high demand communication resource needs, illustratively for a virtual meeting, the processor of the work laptop 1301 may predict the demand and request more communication resources from the network access node 1602 for the duration of the meeting.

In one example, the smart TV 1305 may execute a running application of OTT streaming type. The processor of the smart TV 1305 may predict a bandwidth demand and based on a buffering capability of the smart TV 1305; the processor of the smart TV 1305 may demand more communication resources at designated (e.g. regular) intervals, and then switch to less communication resources, so that other communication devices within the network may use remaining communication resources.

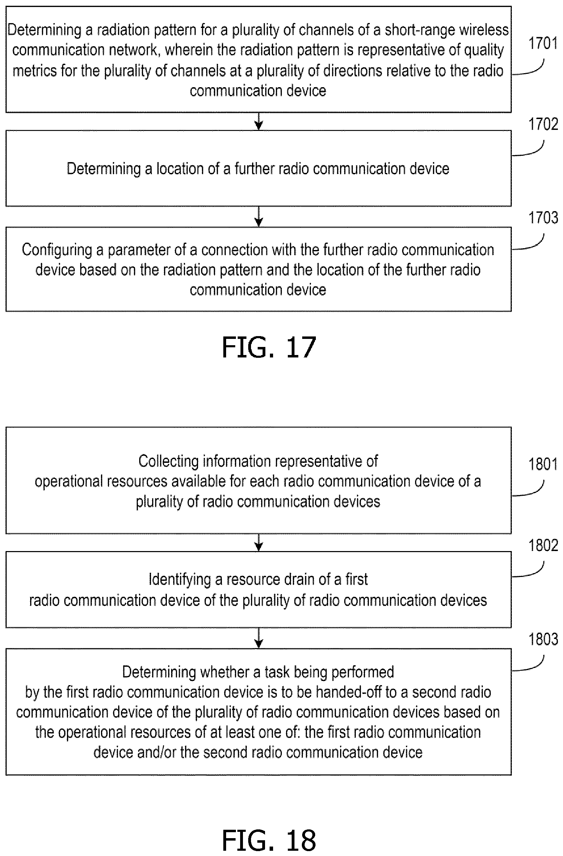

FIG. 17 shows an example of a method. The method may include: determining 1701 a radiation pattern for a plurality of channels of a short-range wireless communication network, wherein the radiation pattern is representative of quality metrics for the plurality of channels at a plurality of directions relative to the radio communication device; determining 1702 a location of a further radio communication device; and configuring 1703 a parameter of a connection with the further radio communication device based on the radiation pattern and the location of the further radio communication device.

FIG. 18 shows an example of a method. The method may include: collecting 1801 information representative of operational resources available for each radio communication device of a plurality of radio communication devices; identifying 1802 a resource drain of a first radio communication device of the plurality of radio communication devices; determining 1803 whether a task being performed by the first radio communication device is to be handed-off to a second radio communication device of the plurality of radio communication devices based on the operational resources of at least one of: the first radio communication device and/or the second radio communication device.

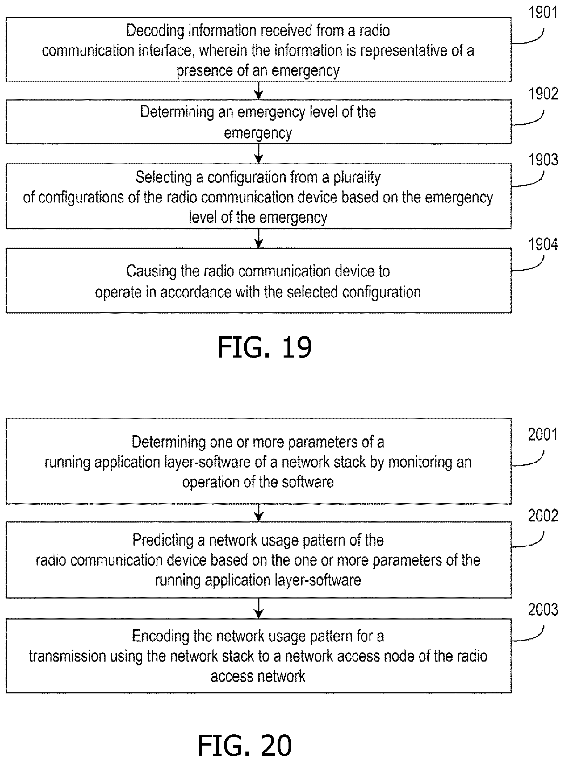

FIG. 19 shows an example of a method. The method may include decoding 1901 information received from a radio communication interface, wherein the information is representative of a presence of an emergency; determining 1902 an emergency level of the emergency; selecting 1903 a configuration from a plurality of configurations of the radio communication device based on the emergency level of the emergency; and causing 1904 the radio communication device to operate in accordance with the selected configuration.

FIG. 20 shows an example of a method. The method may include determining 2001 one or more parameters of a running application layer-software of a network stack by monitoring an operation of the software; predicting 2002 a network usage pattern of the radio communication device based on the one or more parameters of the running application layer-software; encoding 2003 the network usage pattern for a transmission using the network stack to a network access node of the radio access network.

The following examples pertain to further aspects of this disclosure.

In example 1A, the subject matter includes an apparatus of a radio communication device, the apparatus may include a processor configured to: determine a radiation pattern for a plurality of channels of a short-range wireless communication network, wherein the radiation pattern is representative of quality metrics for the plurality of channels at a plurality of directions relative to the radio communication device; determine a location of a further radio communication device; configure a parameter of a connection with the further radio communication device based on the radiation pattern and the location of the further radio communication device.

In example 2A, the subject matter of example 1A, wherein the processor is further configured to establish the connection with the further radio communication device according to the configured parameter based on the radiation pattern and the location of the further radio communication device.

In example 3A, the subject matter of example 1A or example 2A, wherein the processor is further configured to configure an established connection with the further radio communication device according to the configured parameter, such that a first channel of the plurality of channels configured for the established connection is changed into a second channel of the plurality of channels.

In example 4A, the apparatus example 3A, wherein the first channel has a first quality metric of the quality metrics and the second channel has a second quality metric of the quality metrics, wherein the second quality metric is indicative of a better radio quality than the first quality metric.

In example 5A, the subject matter of example 3A or example 4A, wherein each channel of the plurality of channels is associated with a channel frequency that is different from channel frequencies of other channels of the plurality of channels.

In example 6A, the subject matter of any one of examples 1A to 5A, wherein the processor is further configured to determine the radiation pattern based on a monitoring of a radiation gain at each direction of the plurality of directions.

In example 7A, the subject matter of any one of examples 1A to 6A, wherein the processor is further configured to configure the connection with the further radio communication device based on monitoring data received from other radio communication devices within the short-range wireless communication network; wherein the monitoring data is representative of one or more quality metrics of radio communication with the short-range wireless communication network associated with a performed monitoring by the other radio communication devices.

In example 8A, the subject matter of example 7A, wherein the processor is further configured to perform the monitoring of the radiation gain to obtain information representative of one or more quality metrics of radio communication within the short-range wireless communication network.

In example 9A, the subject matter of any one of examples 1A to 8A, wherein the processor is further configured to store the information representative of one or more quality metrics of radio communication within the short-range wireless communication network.

In example 10A, the subject matter of any one of examples 1A to 9A, wherein the processor is further configured to determine a set of frequencies associated with a set of channels of the plurality of channels based on the radiation pattern and the location of the further radio communication device; wherein the processor is further configured to communicate with the further radio communication device using a frequency hopping technique in which the set of frequencies are used.

In example 11A, the subject matter of example 10A, wherein the set of frequencies are determined based on a corresponding quality metric of each channel of the plurality of channels and a threshold.

In example 12A, the subject matter of any one of examples 1A to 11A, wherein the processor is further configured to predict a direction of the further radio communication device relative to the radio communication device; wherein the location of the further radio communication device includes the predicted direction of the further radio communication device.

In example 13A, the subject matter of any one of examples 1A to 12A, wherein the processor is further configured to receive channel assessment data other radio communication devices and configure the connection with the further radio communication device based on the channel assessment data.

In example 14A, the subject matter of example 13A, wherein the processor is further configured to receive the channel assessment data at configured intervals.

In example 15A, the subject matter of example 13A or example 14A, wherein the processor is further configured to aggregate channel assessment data received from a plurality of other radio communication devices to obtain aggregated channel assessment data may include information representative of channel quality metrics of the plurality of channels.

In example 16A, the subject matter of example 15A, wherein the plurality of other radio communication devices includes radio communication devices of the short-range wireless communication network and at least one further short-range wireless communication network.

In example 17A, the subject matter of any one of examples 15A or 16A, wherein the channel quality metrics are obtained by central devices and peripheral devices of the short-range wireless communication network and the at least one further short-range wireless communication network; wherein the processor is configured to collect the channel quality metric from the central devices and the peripheral devices to obtain the aggregated channel assessment data.

In example 18A, the subject matter of example 16A or example 17A, wherein the channel assessment data includes further channel quality metrics of a further radio access technology, which the further radio technology is different from a radio technology of the short-range wireless communication network.

In example 19A, the subject matter of any one of examples 15A to 17A, wherein the channel quality metrics, for each channel of the plurality of channels, include a corresponding packet error rate obtained using the respective channel.

In example 20A, the subject matter of any one of examples 15A to 19A, wherein the processor is further configured to determine, based on the channel assessment data, channel recommendations for connected radio communication devices connected to the short-range wireless communication network and/or for attempting radio communication devices attempting to connect to the short-range wireless communication network.

In example 21A, the subject matter of example 20A, wherein the processor is further configured to encode a determined channel recommendation to the further communication device being one of the connected radio communication devices or the attempting radio communication devices; wherein the determined channel recommendation includes information related to at least one radio zone of the short-range wireless communication network based on a spatial location of the further communication device.

In example 22A, the subject matter of example 21A, wherein the processor is further configured to encode the determined channel recommendation to the further communication device when the further communication device enters within a radio zone of the at least one radio zone of the short-range wireless communication network.

In example 23A, the subject matter of example 21A or 22A, wherein the determined channel recommendation includes information representative whether at least one radio zone is above or below a predefined radio performance metric.

In example 24A, the subject matter of any one of examples 15A to 23A, wherein the aggregated channel assessment data includes a plurality of radio zones and a radio performance metric associated with each radio zone of the plurality of radio zones.

In example 25A, the subject matter of any one of examples 15A to 24A, wherein the aggregated channel assessment data is maintained in a cloud or a server and is updated periodically to obtain a real-time or a quasi-real-time channel assessment database.

In example 26A, the subject matter of any one of examples 15A to 25A, wherein the processor is further configured to detect an incoming radio communication device attempting to communicate within the short-range wireless communication network; wherein the processor is further configured to encode the aggregated channel assessment data for a transmission to the incoming radio communication device.

In example 27A, the subject matter of any one of examples 15A or 26A, wherein the aggregated channel assessment data includes the channel quality metrics for one or more use cases; wherein the processor is further configured to determine a recommended action for each use case of the one or more use cases based on the respective channel quality metrics for the one or more use cases.

In example 28A, the subject matter of any one of examples 13A to 27A, wherein the processor is further configured to determine a set of further frequencies associated with a set of further channels of the plurality of channels based on the aggregated channel assessment data; wherein the set of further channels are determined by selecting best performing channels from the plurality of channels; wherein the processor is further configured to configure the further radio communication device to communicate with a frequency hopping technique in which the set of further frequencies are used.

In example 29A, the subject matter of any one of examples 15A to 28A, wherein the aggregated channel assessment data includes the channel quality metrics of each channel of all available channels associated with the short-range wireless communication network, and optionally further channels of the further short-range wireless communication network and/or channels of the further radio access technology.

In example 30A, the subject matter of any one of examples 1A to 29A, further may include a transceiver configured to communicate within the short-range wireless communication network.

In example 31A, the subject matter of any one of examples 1A to 30A, further may include a measurement circuit configured to perform a measurement of received radio signals.

In example 32A, the subject matter includes a method for a radio communication device, the method may include: determining a radiation pattern for a plurality of channels of a short-range wireless communication network, wherein the radiation pattern is representative of quality metrics for the plurality of channels at a plurality of directions relative to the radio communication device; determining a location of a further radio communication device; configuring a parameter of a connection with the further radio communication device based on the radiation pattern and the location of the further radio communication device.

In example 33A, the subject matter of example 32A, further may include establishing the connection with the further radio communication device according to the configured parameter based on the radiation pattern and the location of the further radio communication device.

In example 34A, the subject matter of example 32A or example 33A, further may include configuring an established connection with the further radio communication device according to the configured parameter, such that a first channel of the plurality of channels configured for the established connection is changed into a second channel of the plurality of channels.

In example 35A, the apparatus of example 34A, wherein the first channel has a first quality metric of the quality metrics and the second channel has a second quality metric of the quality metrics, wherein the second quality metric is indicative of a better radio quality than the first quality metric.

In example 36A, the subject matter of example 34A or example 35A, wherein each channel of the plurality of channels is associated with a channel frequency that is different from channel frequencies of other channels of the plurality of channels.

In example 37A, the subject matter of any one of examples 32A to 36A, further may include determining the radiation pattern based on a monitoring of a radiation gain at each direction of the plurality of directions.

In example 38A, the subject matter of any one of examples 32A to 37A, further may include configuring the connection with the further radio communication device based on monitoring data received from other radio communication devices within the short-range wireless communication network; wherein the monitoring data is representative of one or more quality metrics of radio communication with the short-range wireless communication network associated with a performed monitoring by the other radio communication devices.

In example 39A, the subject matter of example 38A, further may include performing the monitoring of the radiation gain to obtain information representative of one or more quality metrics of radio communication within the short-range wireless communication network.

In example 40A, the subject matter of any one of examples 32A to 39A, further may include storing the information representative of one or more quality metrics of radio communication within the short-range wireless communication network.

In example 41A, the subject matter of any one of examples 32A to 40A, further may include determining a set of frequencies associated with a set of channels of the plurality of channels based on the radiation pattern and the location of the further radio communication device; communicating with the further radio communication device using a frequency hopping technique in which the set of frequencies are used.

In example 42A, the subject matter of example 41A, wherein the set of frequencies are determined based on a corresponding quality metric of each channel of the plurality of channels and a threshold.

In example 43A, the subject matter of any one of examples 32A to 42A, further may include predicting a direction of the further radio communication device relative to the radio communication device; wherein the location of the further radio communication device includes the predicted direction of the further radio communication device.

In example 44A, the subject matter of any one of examples 32A to 43A, further may include receiving channel assessment data other radio communication devices and configure the connection with the further radio communication device based on the channel assessment data.

In example 45A, the subject matter of example 44A, further may include receiving the channel assessment data at configured intervals.

In example 46A, the subject matter of example 44A or example 45A, further may include aggregating channel assessment data received from a plurality of other radio communication devices to obtain aggregated channel assessment data may include information representative of channel quality metrics of the plurality of channels.

In example 47A, the subject matter of example 46A, wherein the plurality of other radio communication devices includes radio communication devices of the short-range wireless communication network and at least one further short-range wireless communication network.

In example 48A, the subject matter of any one of examples 46A or 47A, wherein the channel quality metrics are obtained by central devices and peripheral devices of the short-range wireless communication network and the at least one further short-range wireless communication network; the method further may include collecting the channel quality metric from the central devices and the peripheral devices to obtain the aggregated channel assessment data.

In example 49A, the subject matter of example 47A or example 48A, wherein the channel assessment data includes further channel quality metrics of a further radio access technology, which the further radio technology is different from a radio technology of the short-range wireless communication network.

In example 50A, the subject matter of any one of examples 46A to 48A, wherein the channel quality metrics, for each channel of the plurality of channels, include a corresponding packet error rate obtained using the respective channel.

In example 51A, the subject matter of any one of examples 46A to 50A, further may include determining, based on the channel assessment data, channel recommendations for connected radio communication devices connected to the short-range wireless communication network and/or for attempting radio communication devices attempting to connect to the short-range wireless communication network.

In example 52A, the subject matter of example 51A, further may include encoding a determined channel recommendation to the further communication device being one of the connected radio communication devices or the attempting radio communication devices; wherein the determined channel recommendation includes information related to at least one radio zone of the short-range wireless communication network based on a spatial location of the further communication device.

In example 53A, the subject matter of example 52A, further may include encoding the determined channel recommendation to the further communication device when the further communication device enters within a radio zone of the at least one radio zone of the short-range wireless communication network.

In example 54A, the subject matter of example 52A or 53A, wherein the determined channel recommendation includes information representative whether at least one radio zone is above or below a predefined radio performance metric.

In example 55A, the subject matter of any one of examples 46A to 54A, wherein the aggregated channel assessment data includes a plurality of radio zones and a radio performance metric associated with each radio zone of the plurality of radio zones.

In example 56A, the subject matter of any one of examples 46A to 55A, wherein the aggregated channel assessment data is maintained in a cloud or a server and is updated periodically to obtain a real-time or a quasi-real-time channel assessment database.

In example 57A, the subject matter of any one of examples 46A to 56A, further may include detecting an incoming radio communication device attempting to communicate within the short-range wireless communication network; encoding the aggregated channel assessment data for a transmission to the incoming radio communication device.

In example 58A, the subject matter of any one of examples 46A or 57A, wherein the aggregated channel assessment data includes the channel quality metrics for one or more use cases; the method further may include determine a recommended action for each use case of the one or more use cases based on the respective channel quality metrics for the one or more use cases.

In example 59A, the subject matter of any one of examples 44A to 58A, further may include determining a set of further frequencies associated with a set of further channels of the plurality of channels based on the aggregated channel assessment data; wherein the set of further channels are determined by selecting best performing channels from the plurality of channels; the method further may include configuring the further radio communication device to communicate with a frequency hopping technique in which the set of further frequencies are used.

In example 60A, the subject matter of any one of examples 46A to 59A, wherein the aggregated channel assessment data includes the channel quality metrics of each channel of all available channels associated with the short-range wireless communication network, and optionally further channels of the further short-range wireless communication network and/or channels of the further radio access technology.

In example 61A, a non-transitory computer-readable medium may include one or more instructions which, if executed by a processor, cause the processor to any one of examples 32A to 60A.

In example 1B, the subject matter includes an apparatus that may include a processor configured to: collect information representative of operational resources available for each radio communication device of a plurality of radio communication devices; identify a resource drain of a first radio communication device of the plurality of radio communication devices; determine whether a task being performed by the first radio communication device is to be handed-off to a second radio communication device of the plurality of radio communication devices based on the operational resources of at least one of: the first radio communication device and/or the second radio communication device.

In example 2B, the subject matter of example 1B, wherein the processor is further configured to determine whether the first radio communication device is to establish a connection with the second radio communication device.

In example 3B, the subject matter of example 1B or example 2B, wherein the second connection is determined based on the task performed by the first communication device.

In example 4B, the subject matter of any one of examples 1B to 3B, wherein the processor is configured to encode information for a transmission to the second radio communication device, wherein the information is representative of a request to hand off the task.

In example 5B, the subject matter of any one of examples 1B to 4B, wherein the processor is configured to encode information for a transmission to the second radio communication device, wherein the information is representative of a request to establish a connection with the first radio communication device.

In example 6B, the subject matter of any one of examples 1B to 5B, wherein the processor is configured to determine whether the second communication device is capable to perform the task.

In example 7B, the subject matter of any one of examples 1B to 6B, wherein the processor is configured to determine whether the task being performed by the first communication device is to be handed off to the second communication device based on one of the operational resources available for the first radio communication device and a threshold for the one of the operational resources.

In example 8B, the subject matter of example 7B, wherein the processor is configured determine that the task being performed by the first communication device is to be handed off to the second communication device if the one of the operational resources available for the first radio communication device is at a first side of the threshold; wherein the processor is further configured to determine the second radio communication device based on an operational resource available for the second radio communication device corresponding to the one of the operational resources available for the second radio communication device.

In example 9B, the subject matter of example 8B, wherein the operational resource available for the second radio communication device is at a second side of the threshold.

In example 10B, the subject matter of example 7B or example 8B, wherein the processor is further configured to select the second radio communication device from the plurality of radio communication devices, wherein the second radio communication device is associated with a best available operational resource corresponding to the one of the operational resources available for the first radio communication device.

In example 11B, the subject matter of any one of examples 1B to 10B, wherein the information, for each radio communication device, includes at least one of: a remaining battery charge state, a packet error rate, a data throughput, a network capability, a memory usage, an available memory, a processing capability, a processor overhead, and/or an available network type for communication.

In example 12B, the subject matter of any one of examples 1B to 11B, wherein the processor is configured to collect the information at configured intervals.

In example 13B, the subject matter of any one of examples 1B to 12B, wherein the processor is configured to collect the information using a Bluetooth Low Energy protocol.

In example 14B, the subject matter of example 13B, wherein the information is collected based on advertisement packets received from the plurality of radio communication devices.

In example 15B, the subject matter of example 13B or example 14B, wherein the processor is further configured to encode the information for the transmission to the first radio communication device in an advertisement packet.

In example 16B, the subject matter of example 15B, wherein the transmission to the first radio communication device is a unicast advertisement packet.

In example 17B, the subject matter of any one of examples 1B to 16B, further may include a memory configured to store the information in a look up table structure.

In example 18B, the subject matter of any one of examples 1B to 17B, further may include a transceiver configured to provide communication with the plurality of radio communication devices.

In example 19B, a system may include: the apparatus of any one of examples 1B to 18B, the plurality of radio communication devices; each radio communication device of the plurality of radio communication devices includes a processor configured to: encode the information representative of operational resources available for the respective radio communication device for a transmission to the apparatus.

In example 20B, the subject matter includes a method that may include: collecting information representative of operational resources available for each radio communication device of a plurality of radio communication devices; identifying a resource drain of a first radio communication device of the plurality of radio communication devices; determining whether a task being performed by the first radio communication device is to be handed-off to a second radio communication device of the plurality of radio communication devices based on the operational resources of at least one of: the first radio communication device and/or the second radio communication device.

In example 21B, the subject matter of example 20B, further may include determining whether the first radio communication device is to establish a connection with the second radio communication device.

In example 22B, the subject matter of example 20B or example 21B, wherein the second connection is determined based on the task performed by the first communication device.

In example 23B, the subject matter of any one of examples 20B to 22B, further may include encoding information for a transmission to the second radio communication device, wherein the information is representative of a request to hand off the task.

In example 24B, the subject matter of any one of examples 20B to 23B, further may include encoding information for a transmission to the second radio communication device, wherein the information is representative of a request to establish a connection with the first radio communication device.

In example 25B, the subject matter of any one of examples 20B to 24B, further may include determining whether the second communication device is capable to perform the task.

In example 26B, the subject matter of any one of examples 20B to 25B, further may include determining whether the task being performed by the first communication device is to be handed off to the second communication device based on one of the operational resources available for the first radio communication device and a threshold for the one of the operational resources.

In example 27B, the subject matter of example 26B, further may include determining that the task being performed by the first communication device is to be handed off to the second communication device if the one of the operational resources available for the first radio communication device is at a first side of the threshold; determining the second radio communication device based on an operational resource available for the second radio communication device corresponding to the one of the operational resources available for the second radio communication device.

In example 28B, the subject matter of example 27B, wherein the operational resource available for the second radio communication device is at a second side of the threshold.

In example 29B, the subject matter of example 27B or example 28B, further may include selecting the second radio communication device from the plurality of radio communication devices, wherein the second radio communication device is associated with a best available operational resource corresponding to the one of the operational resources available for the first radio communication device.

In example 30B, the subject matter of any one of examples 20B to 29B, wherein the information, for each radio communication device, includes at least one of: a remaining battery charge state, a packet error rate, a data throughput, a network capability, a memory usage, an available memory, a processing capability, a processor overhead, and/or an available network type for communication.

In example 31B, the subject matter of any one of examples 20B to 30B, further may include collecting the information at configured intervals.

In example 32B, the subject matter of any one of examples 20B to 31B, further may include collecting the information using a Bluetooth Low Energy protocol.

In example 33B, the subject matter of example 32B, wherein the information is collected based on advertisement packets received from the plurality of radio communication devices.

In example 34B, the subject matter of example 32B or example 33B, further may include encoding the information for the transmission to the first radio communication device in an advertisement packet.

In example 35B, the subject matter of example 35B, wherein the transmission to the first radio communication device is a unicast advertisement packet.

In example 36B, a non-transitory computer readable medium may include one or more instructions which, if executed by a processor, cause the processor to perform any one of examples 20B to 35B.

In example 1C, the subject matter includes an apparatus of a radio communication device, the apparatus may include a processor configured to: decode information received from a radio communication interface, wherein the information is representative of a presence of an emergency; determine an emergency level of the emergency; select a configuration from a plurality of configurations of the radio communication device based on the emergency level of the emergency; cause the radio communication device to operate in accordance with the selected configuration.

In example 2C, the subject matter of example 1C, wherein the plurality of configurations includes a low power configuration in which the radio communication device is configured to consume less power than at least one other configuration of the plurality of configurations.

In example 3C, the subject matter of example 2C, wherein the processor is configured to cause the radio communication device to operate in accordance with the low power configuration in response to the presence of the emergency.

In example 4C, the subject matter of any one of examples 1C to 3C, wherein the processor is further configuration to determine a remaining battery level of the radio communication device; wherein the selected configuration is based on the remaining battery level of the radio communication device.

In example 5C, the subject matter of any one of examples 1C to 4C, wherein the plurality of configurations includes a configuration in which a position detection subsystem of the radio communication device is operational.

In example 6C, the subject matter of any one of examples 1C to 5C, wherein the plurality of configurations includes a configuration in which a radio communication subsystem of the radio communication device is operational.

In example 7C, the subject matter of any one of examples 1C to 6C, wherein the plurality of configurations includes a configuration in which a detected position of the radio communication device is shared by software operating at an application layer of the radio communication device.

In example 8C, the subject matter of any one of examples 1C to 7C, wherein the processor is configured to determine a location of the radio communication device; wherein the processor is further configured to calculate a risk metric based on the location of the radio communication device and the decoded information.

In example 9C, the subject matter of any one of examples 1C to 8C, wherein the processor is configured to generate a user alert based on the decoded information.

In example 10C, the subject matter of example 9C, wherein the processor is configured to generate information to be displayed by a display of the radio communication device to a user based on the decoded information.

In example 11C, the subject matter of example 10C, wherein the processor is configured to select the configuration based on an input of the user.

In example 12C, the subject matter of any one of examples 1C to 11C, wherein the processor is configured to encode one or more messages to be sent to one or more predefined addressees in response to the presence of the emergency based on decoded information.

In example 13C, the subject matter of example 12C, wherein the one or more messages to be sent to the one or more predefined addressees includes a determined location of the radio communication device.

In example 14C, the subject matter of any one of examples 1C to 13C, wherein the decoded information further includes a type of the emergency.

In example 15C, the subject matter of any one of examples 1C to 14C, wherein the processor is configured to determine the emergency level of the emergency based on the decoded information.

In example 16C, the subject matter of any one of examples 1C to 15C, wherein the processor is configured to determine the emergency level of the emergency based on messages received from further radio communication devices connected to the radio communication device.

In example 17C, the subject matter of any one of examples 1C to 16C, wherein the information received from the radio communication interface includes at least one of a short message service (SMS) message, a push notification, and/or a message of a subscribed software as a service message.

In example 18C, the subject matter of any one of examples 1C to 17C, further may include a memory configured to store the plurality of configurations.

In example 19C, the subject matter of any one of examples 1C to 18C, further may include a transceiver coupled to the radio interface.

In example 20C, the subject matter includes a method for radio communication device, the method may include: decoding information received from a radio communication interface, wherein the information is representative of a presence of an emergency; determining an emergency level of the emergency; selecting a configuration from a plurality of configurations of the radio communication device based on the emergency level of the emergency; causing the radio communication device to operate in accordance with the selected configuration.

In example 21C, the subject matter of example 20C, wherein the plurality of configurations includes a low power configuration in which the radio communication device is configured to consume less power than at least one other configuration of the plurality of configurations.

In example 22C, the subject matter of example 21C, further may include causing the radio communication device to operate in accordance with the low power configuration in response to the presence of the emergency.

In example 23C, the subject matter of any one of examples 20C to 22C, further may include determining a remaining battery level of the radio communication device; wherein the selected configuration is based on the remaining battery level of the radio communication device.

In example 24C, the subject matter of any one of examples 20C to 23C, wherein the plurality of configurations includes a configuration in which a position detection subsystem of the radio communication device is operational.

In example 25C, the subject matter of any one of examples 20C to 24C, wherein the plurality of configurations includes a configuration in which a radio communication subsystem of the radio communication device is operational.

In example 26C, the subject matter of any one of examples 20C to 25C, wherein the plurality of configurations includes a configuration in which a detected position of the radio communication device is shared by software operating at an application layer of the radio communication device.

In example 27C, the subject matter of any one of examples 20C to 26C, determining a location of the radio communication device; calculating a risk metric based on the location of the radio communication device and the decoded information.

In example 28C, the subject matter of any one of examples 20C to 27C, further may include generating a user alert based on the decoded information.

In example 29C, the subject matter of example 28C, generating information to be displayed by a display of the radio communication device to a user based on the decoded information.

In example 30C, the subject matter of example 29C, further may include selecting the configuration based on an input of the user.

In example 31C, the subject matter of any one of examples 20C to 30C, further may include encoding one or more messages to be sent to one or more predefined addressees in response to the presence of the emergency based on decoded information.

In example 32C, the subject matter of example 31C, wherein the one or more messages to be sent to the one or more predefined addressees includes a determined location of the radio communication device.

In example 33C, the subject matter of any one of examples 20C to 32C, wherein the decoded information further includes a type of the emergency.

In example 34C, the subject matter of any one of examples 20C to 33C, further may include determining the emergency level of the emergency based on the decoded information.

In example 35C, the subject matter of any one of examples 20C to 34C, further may include determining the emergency level of the emergency based on messages received from further radio communication devices connected to the radio communication device.

In example 36C, the subject matter of any one of examples 20C to 35C, wherein the information received from the radio communication interface includes at least one of a short message service (SMS) message, a push notification, and/or a message of a subscribed software as a service message.

In example 37C, a non-transitory computer-readable medium may include one or more instructions which, if executed by a processor, cause the processor to perform any one of examples 20C to 36C.

In example 1D, the subject matter includes an apparatus of a radio communication device of a radio access network, the apparatus may include a processor configured to: determine one or more parameters of a running application layer-software of a network stack by monitoring an operation of the software; predict a network usage pattern of the radio communication device based on the one or more parameters of the running application layer-software; encode the network usage pattern for a transmission using the network stack to a network access node of the radio access network.

In example 2D, the subject matter of example 1D, wherein the processor is further configured to predict the network usage pattern for the radio communication device based on further network bandwidth requirements of further running application layer-software of the network stack.

In example 3D, the subject matter of example 1D or example 2D, wherein the processor is further configured to predict the network usage pattern of the radio communication device based on information representative of at least one of a current user or a type of the radio communication device, time information, and/or a type of the running application layer-software.

In example 4D, the subject matter of any one of examples 1D to 3D, wherein the processor is further configured to predict the network usage pattern of the radio communication device using a trained machine learning model; wherein the trained machine learning model is configured to receive input data may include the one or more parameters of the running application layer-software running at the application layer of the network stack and provide output data representative of the network usage pattern of the radio communication device for an instance of time.

In example 5D, the subject matter of any one of examples 1D to 4D, wherein the processor is configured to, in response to a transmission of the encoded network usage pattern, decode scheduling information received from the network access node, wherein the decoded scheduling information is representative of radio communication resources allocated to the radio communication device; wherein the processor is further configured to re-schedule transmissions associated with the running application layer-software based on the decoded scheduling information.

In example 6D, the subject matter of any one of examples 1D to 5D, wherein the decoded scheduling information is representative of a decrease or an increase of previously allocated radio communication resources for the radio communication device.

In example 7D, the subject matter of any one of examples 1D to 6D, wherein the network usage pattern is encoded if the network usage pattern is above or below a threshold.

In example 8D, the subject matter of any one of examples 1D to 7D, wherein the network usage pattern further includes information representative of at least one of: the running application layer-software, a type of the running application layer-software, a determined network bandwidth for a period of time, and/or an indication to increase or decrease previously allocated network bandwidth.

In example 9D, the subject matter of any one of examples 1D to 8D, further may include a transceiver configured to communicate with the network access node.

In example 10D, the subject matter includes an apparatus of an access node of a radio access network, the apparatus may include a processor configured to: decode network usage information received from at least one radio communication device of a plurality of radio communication devices communicatively coupled to the access node, wherein the network usage information is representative, for the at least one radio communication device of the plurality of radio communication devices, a respective predicted network usage pattern; allocate radio communication resources to each radio communication device of the plurality of radio communication device based on the network usage information; encode scheduling information based on the allocated radio communication resources for transmissions to the plurality of radio communication devices.

In example 11D, the subject matter of example 10D, wherein the processor is further configured to allocate the radio communication resources to each radio communication device based on information representative of at least one of a current user or a type of the each radio communication device, time information, and/or a type of the application layer-software running on the each radio communication device.

In example 12D, the subject matter of example 10D or example 11D, wherein the scheduling information encoded for one of the transmissions to one of the plurality of radio communication devices includes an instruction to operate in a low power mode for a period of time.

In example 13D, the subject matter of any one of examples 10D to 12D, wherein the processor is further configured to reallocate previously allocated radio communication resources based on the network usage information.

In example 14D, the subject matter of any one of examples 10D to 13D, wherein more radio communication resources are allocated to the at least one radio communication device in view of previously allocated radio communication resources to the at least one radio communication device if the network usage information received from the at least one radio communication device is representative of an increase at the respective predicted network usage pattern.

In example 15D, the subject matter of any one of examples 10D to 14D, wherein less radio communication resources are allocated to the at least one radio communication device in view of previously allocated radio communication resources to the at least one radio communication device if the network usage information received from the at least one radio communication device is representative of an increase at the respective predicted network usage pattern.

In example 16D, the subject matter of any one of examples 10D to 15D, wherein the processor is further configured to determine a first set of radio communication resources to be reallocated based on the network usage information; wherein the processor is further configured to determine a second set of radio communication resources, wherein an allocation of the second set of radio communication resources are independent from the network usage information decoded by the processor.

In example 17D, the subject matter of any one of examples 10D to 17D, wherein the network usage information further includes information representative of at least one of: the running application layer-software, a type of the running application layer-software, a determined network bandwidth for a period of time, and/or an indication to increase or decrease previously allocated network bandwidth.

In example 18D, the subject matter of any one of examples 10D to 18D, further may include a transceiver configured to provide communication with the plurality of radio communication devices.

In example 19D, an access node may include: the apparatus of any one of examples 10D to 18D, a communication interface configured to communicate with the plurality of radio communication devices.

In example 20D, the subject matter includes a method for a radio communication device of a radio access network, the method may include: determining one or more parameters of a running application layer-software of a network stack by monitoring an operation of the software; predicting a network usage pattern of the radio communication device based on the one or more parameters of the running application layer-software; encoding the network usage pattern for a transmission using the network stack to a network access node of the radio access network.

In example 21D, the subject matter of example 20D, further may include predicting the network usage pattern for the radio communication device based on further network bandwidth requirements of further running application layer-software of the network stack.

In example 22D, the subject matter of example 20D or example 21D, further may include predicting the network usage pattern of the radio communication device based on information representative of at least one of a current user or a type of the radio communication device, time information, and/or a type of the running application layer-software.

In example 23D, the subject matter of any one of examples 20D to 22D, further may include predicting the network usage pattern of the radio communication device using a trained machine learning model; wherein the trained machine learning model is configured to receive input data may include the one or more parameters of the running application layer-software running at the application layer of the network stack and provide output data representative of the network usage pattern of the radio communication device for an instance of time.

In example 24D, the subject matter of any one of examples 20D to 23D, further may include, in response to a transmission of the encoded network usage pattern, decoding scheduling information received from the network access node, wherein the decoded scheduling information is representative of radio communication resources allocated to the radio communication device; re-scheduling transmissions associated with the running application layer-software based on the decoded scheduling information.

In example 25D, the subject matter of any one of examples 20D to 24D, wherein the decoded scheduling information is representative of a decrease or an increase of previously allocated radio communication resources for the radio communication device.

In example 26D, the subject matter of any one of examples 20D to 25D, wherein the network usage pattern is encoded if the network usage pattern is above or below a threshold.

In example 27D, the subject matter of any one of examples 20D to 26D, wherein the network usage pattern further includes information representative of at least one of: the running application layer-software, a type of the running application layer-software, a determined network bandwidth for a period of time, and/or an indication to increase or decrease previously allocated network bandwidth.

In example 28D, the subject matter includes a method for an access node of a radio access network, the method may include: decoding network usage information received from at least one radio communication device of a plurality of radio communication devices communicatively coupled to the access node, wherein the network usage information is representative, for the at least one radio communication device of the plurality of radio communication devices, a respective predicted network usage pattern; allocating radio communication resources to each radio communication device of the plurality of radio communication device based on the network usage information; encoding scheduling information based on the allocated radio communication resources for transmissions to the plurality of radio communication devices.

In example 29D, the subject matter of example 28D, further may include allocating the radio communication resources to each radio communication device based on information representative of at least one of a current user or a type of the each radio communication device, time information, and/or a type of the application layer-software running on the each radio communication device.

In example 30D, the subject matter of example 28D or example 29D, wherein the scheduling information encoded for one of the transmissions to one of the plurality of radio communication devices includes an instruction to operate in a low power mode for a period of time.

In example 31D, the subject matter of any one of examples 28D to 30D, further may include reallocating previously allocated radio communication resources based on the network usage information.

In example 32D, the subject matter of any one of examples 28D to 31D, wherein more radio communication resources are allocated to the at least one radio communication device in view of previously allocated radio communication resources to the at least one radio communication device if the network usage information received from the at least one radio communication device is representative of an increase at the respective predicted network usage pattern.

In example 33D, the subject matter of any one of examples 28D to 32D, wherein less radio communication resources are allocated to the at least one radio communication device in view of previously allocated radio communication resources to the at least one radio communication device if the network usage information received from the at least one radio communication device is representative of an increase at the respective predicted network usage pattern.

In example 34D, the subject matter of any one of examples 28D to 33D, further may include determining a first set of radio communication resources to be reallocated based on the network usage information; determining a second set of radio communication resources, wherein an allocation of the second set of radio communication resources is independent from the network usage information decoded by the processor.

In example 35D, the subject matter of any one of examples 28D to 34D, wherein the network usage information further includes information representative of at least one of: the running application layer-software, a type of the running application layer-software, a determined network bandwidth for a period of time, and/or an indication to increase or decrease previously allocated network bandwidth.

In example 36D, a non-transitory computer readable medium may include one or more instructions which, if executed by a processor, cause the processor to perform any one of examples 20D to 35D.

The word "exemplary" is used herein to mean "serving as an example, instance, or illustration". Any embodiment or design described herein as "exemplary" is not necessarily to be construed as preferred or advantageous over other embodiments or designs.

The words "plurality" and "multiple" in the description or the claims expressly refer to a quantity greater than one. The terms "group (of)", "set [of]", "collection (of)", "series (of)", "sequence (of)", "grouping (of)", etc., and the like in the description or in the claims refer to a quantity equal to or greater than one, i.e. one or more. Any term expressed in plural form that does not expressly state "plurality" or "multiple" likewise refers to a quantity equal to or greater than one.

As used herein, "memory" is understood as a non-transitory computer-readable medium in which data or information can be stored for retrieval. References to "memory" included herein may thus be understood as referring to volatile or non-volatile memory, including random access memory ("RAM"), read-only memory ("ROM"), flash memory, solid-state storage, magnetic tape, hard disk drive, optical drive, etc., or any combination thereof. Furthermore, registers, shift registers, processor registers, data buffers, etc., are also embraced herein by the term memory. A single component referred to as "memory" or "a memory" may be composed of more than one different type of memory, and thus may refer to a collective component including one or more types of memory. Any single memory component may be separated into multiple collectively equivalent memory components, and vice versa. Furthermore, while memory may be depicted as separate from one or more other components (such as in the drawings), memory may also be integrated with other components, such as on a common integrated chip or a controller with an embedded memory.

The term "software" refers to any type of executable instruction, including firmware.

In the context of this disclosure, the term "process" may be used, for example, to indicate a method. Illustratively, any process described herein may be implemented as a method (e.g., a channel estimation process may be understood as a channel estimation method). Any process described herein may be implemented as a non-transitory computer readable medium including instructions configured, when executed, to cause one or more processors to carry out the process (e.g., to carry out the method).

Throughout the drawings, it should be noted that like reference numbers are used to depict the same or similar elements, features, and structures, unless otherwise noted. It should be noted that certain components may be omitted for the sake of simplicity. It should be noted that nodes (dots) are provided to identify the circuit line intersections in the drawings including electronic circuit diagrams.

The phrase "at least one" and "one or more" may be understood to include a numerical quantity greater than or equal to one (e.g., one, two, three, four, [...], etc.). The phrase "at least one of" with regard to a group of elements may be used herein to mean at least one element from the group consisting of the elements. For example, the phrase "at least one of" with regard to a group of elements may be used herein to mean a selection of: one of the listed elements, a plurality of one of the listed elements, a plurality of individual listed elements, or a plurality of a multiple of individual listed elements.

The words "plural" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. For instance, the phrase "a plurality" may be understood to include a numerical quantity greater than or equal to two (e.g., two, three, four, five, [...], etc.).

As used herein, a signal or information that is "indicative of", "representative", "representing", or "indicating" a value or other information may be a digital or analog signal that encodes or otherwise, communicates the value or other information in a manner that can be decoded by and/or cause a responsive action in a component receiving the signal. The signal may be stored or buffered in computer-readable storage medium prior to its receipt by the receiving component and the receiving component may retrieve the signal from the storage medium. Further, a "value" that is "indicative of "or "representative" some quantity, state, or parameter may be physically embodied as a digital signal, an analog signal, or stored bits that encode or otherwise communicate the value.

As used herein, a signal may be transmitted or conducted through a signal chain in which the signal is processed to change characteristics such as phase, amplitude, frequency, and so on. The signal may be referred to as the same signal even as such characteristics are adapted. In general, so long as a signal continues to encode the same information, the signal may be considered as the same signal. For example, a transmit signal may be considered as referring to the transmit signal in baseband, intermediate, and radio frequencies.

The terms "processor" or "controller" as, for example, used herein may be understood as any kind of technological entity that allows handling of data. The data may be handled according to one or more specific functions executed by the processor. Further, a processor or controller as used herein may be understood as any kind of circuit, e.g., any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

The terms "one or more processors" is intended to refer to a processor or a controller. The one or more processors may include one processor or a plurality of processors. The terms are simply used as an alternative to the "processor" or "controller".

The term "user device" is intended to refer to a device of a user (e.g. occupant) that may be configured to provide information related to the user. The user device may exemplarily include a mobile phone, a smart phone, a wearable device (e.g. smart watch, smart wristband), a computer, etc.

As utilized herein, terms "module", "component," "system," "circuit," "element," "slice," " circuit," and the like are intended to refer to a set of one or more electronic components, a computer-related entity, hardware, software (e.g., in execution), and/or firmware. For example, circuit or a similar term can be a processor, a process running on a processor, a controller, an object, an executable program, a storage device, and/or a computer with a processing device. By way of illustration, an application running on a server and the server can also be circuit. One or more circuits can reside within the same circuit, and circuit can be localized on one computer and/or distributed between two or more computers. A set of elements or a set of other circuits can be described herein, in which the term "set" can be interpreted as "one or more".

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer. The term "data", however, is not limited to the aforementioned examples and may take various forms and represent any information as understood in the art. The term "data item" may include data or a portion of data.

It will be understood that when an element is referred to as being "connected" or "coupled" to another element, it can be physically connected or coupled to the other element such that current and/or electromagnetic radiation (e.g., a signal) can flow along a conductive path formed by the elements. Inherently, such element is connectable or couplable to the another element. Intervening conductive, inductive, or capacitive elements may be present between the element and the other element when the elements are described as being coupled or connected to one another. Further, when coupled or connected to one another, one element may be capable of inducing a voltage or current flow or propagation of an electro-magnetic wave in the other element without physical contact or intervening components. Further, when a voltage, current, or signal is referred to as being "provided" to an element, the voltage, current, or signal may be conducted to the element by way of a physical connection or by way of capacitive, electro-magnetic, or inductive coupling that does not involve a physical connection.

Unless explicitly specified, the term "instance of time" refers to a time of a particular event or situation according to the context. The instance of time may refer to an instantaneous point in time, or to a period of time which the particular event or situation relates to.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both 'direct' calculations via a mathematical expression/formula/relationship and 'indirect' calculations via lookup or hash tables and other array indexing or searching operations.

While the above descriptions and connected figures may depict electronic device components as separate elements, skilled persons will appreciate the various possibilities to combine or integrate discrete elements into a single element. Such may include combining two or more circuits to form a single circuit, mounting two or more circuits onto a common chip or chassis to form an integrated element, executing discrete software components on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc.

It is appreciated that implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include one or more components configured to perform each aspect of the related method. All acronyms defined in the above description additionally hold in all claims included herein.

All acronyms defined in the above description additionally hold in all claims included herein.

## Claims

1. An apparatus of a radio communication device, the apparatus comprising a processor configured to:
determine a radiation pattern for a plurality of channels of a short-range wireless communication network, wherein the radiation pattern is representative of quality metrics for the plurality of channels at a plurality of directions relative to the radio communication device;
determine a location of a further radio communication device;
configure a parameter of a connection with the further radio communication device based on the radiation pattern and the location of the further radio communication device.

2. The apparatus of claim 1,
wherein the processor is further configured to establish the connection with the further radio communication device according to the configured parameter based on the radiation pattern and the location of the further radio communication device.

3. The apparatus of claim 1 or claim 2,
wherein the processor is further configured to configure an established connection with the further radio communication device according to the configured parameter, such that a first channel of the plurality of channels configured for the established connection is changed into a second channel of the plurality of channels.

4. The apparatus of any one of claims 1 to 3,
wherein the processor is further configured to configure the connection with the further radio communication device based on monitoring data received from other radio communication devices within the short-range wireless communication network;
wherein the monitoring data is representative of one or more quality metrics of radio communication with the short-range wireless communication network associated with a performed monitoring by the other radio communication devices.

5. The apparatus of any one of claims 1 to 4,
wherein the processor is further configured to determine a set of frequencies associated with a set of channels of the plurality of channels based on the radiation pattern and the location of the further radio communication device;
wherein the processor is further configured to communicate with the further radio communication device using a frequency hopping technique in which the set of frequencies are used.

6. The apparatus of claim 5,
wherein the set of frequencies are determined based on a corresponding quality metric of each channel of the plurality of channels and a threshold.

7. The apparatus of any one of claims 1 to 6,
wherein the processor is further configured to predict a direction of the further radio communication device relative to the radio communication device;
wherein the location of the further radio communication device comprises the predicted direction of the further radio communication device.

8. The apparatus of any one of claims 1 to 7,
wherein the processor is further configured to receive channel assessment data of a plurality of other radio communication devices and configure the connection with the further radio communication device based on the channel assessment data.

9. The apparatus of claim 8,
wherein channel quality metrics are obtained by central devices and peripheral devices of the short-range wireless communication network and the at least one further short-range wireless communication network;
wherein the processor is configured to collect the channel quality metric from the central devices and the peripheral devices to obtain the aggregated channel assessment data.

10. The apparatus of claim 8 or 9,
wherein the processor is further configured to determine, based on the channel assessment data, channel recommendations for connected radio communication devices connected to the short-range wireless communication network and/or for attempting radio communication devices attempting to connect to the short-range wireless communication network.

11. The apparatus of claim 10,
wherein the processor is further configured to encode a determined channel recommendation to the further communication device being one of the connected radio communication devices or the attempting radio communication devices;
wherein the determined channel recommendation comprises information related to at least one radio zone of the short-range wireless communication network based on a spatial location of the further communication device.

12. The apparatus of claim 11,
wherein the processor is further configured to encode the determined channel recommendation to the further communication device when the further communication device enters within a radio zone of the at least one radio zone of the short-range wireless communication network.

13. The apparatus of claim 11 or 12,
wherein the determined channel recommendation comprises information representative whether at least one radio zone is above or below a predefined radio performance metric.

14. A method for a radio communication device, the method comprising:
determining a radiation pattern for a plurality of channels of a short-range wireless communication network, wherein the radiation pattern is representative of quality metrics for the plurality of channels at a plurality of directions relative to the radio communication device;
determining a location of a further radio communication device;
configuring a parameter of a connection with the further radio communication device based on the radiation pattern and the location of the further radio communication device.

15. A non-transitory computer-readable medium comprising one or more instructions which, if executed by a processor cause the processor to perform the method of claim 14.
